# EUROPEAN PATENT APPLICATION

(11) **EP 4 694 220 A1**
(43) Date of publication of application: **11.02.2026**
(21) Application number: 24848360.4
(22) Date of filing: 01.08.2024
(51) Int. Cl.: H04W 4/12

(54) **MESSAGE PUSHING METHOD AND SYSTEM, AND RELATED APPARATUS**

(30) Priority: 03.08.2023 CN 202310980018
(71) Applicant: Huawei Technologies Co., Ltd., Shenzhen, Guangdong 518129 (CN)
(72) Inventor: LI, Qiang, Shenzhen, Guangdong 518129 (CN); LIU, Lin, Shenzhen, Guangdong 518129 (CN)
(74) Representative: Grünecker Patent- und Rechtsanwälte PartG mbB
(86) International application number: PCT/CN2024/109282
(87) International publication number: WO 2025/026406

(57) **Abstract**

This application discloses a message push method and system, and a related apparatus. The method is applied to a first electronic device. The method includes: obtaining first service data sent by a first application, where the first service data includes a first service type, first service time, and first service content; determining a first reminder moment of a first service based on the first service type and the first service time; determining a first message based on the first service type, the first reminder moment, and the first service content; and detecting arrival of the first reminder moment, and displaying a first notification based on the first message. **In** this way, a message can be pushed based on a reminder moment, to avoid simultaneous push of a plurality of messages and therefore a user does not miss a message.

## Description

This application claims priority to Chinese Patent Application No. 202310980018.1, filed with the China National Intellectual Property Administration on August 3, 2023 and entitled "MESSAGE PUSH METHOD AND SYSTEM, AND RELATED APPARATUS", which is incorporated herein by reference in its entirety.

### TECHNICAL FIELD

This application relates to the field of electronic technologies, and in particular, to a message push method and system, and a related apparatus.

### BACKGROUND

With development of electronic technologies, smart wearable devices such as watches and bands are increasingly closely related to daily life. In daily life, the wearable devices receive numerous push messages. When the wearable devices receive a plurality of push messages, the plurality of messages are displayed in a folded state, and the folded messages are likely to be missed by users.

### SUMMARY

This application provides a message push method and system, and a related apparatus, so that reminder moments of different messages can be determined based on service types, and message push based on a reminder moment can be implemented, to avoid simultaneous push of a plurality of messages and therefore a user does not miss a message.

According to a first aspect, this application provides a message push method, applied to a first electronic device. The message pushing method includes: obtaining first service data sent by a first application, where the first service data includes a first service type, first service time, and first service content; determining a first reminder moment of a first service based on the first service type and the first service time; determining a first message based on the first service type, the first reminder moment, and the first service content; and detecting arrival of the first reminder moment, and displaying a first notification based on the first message.

In this way, a message can be pushed based on a reminder moment, to avoid simultaneous push of a plurality of messages and therefore a user does not miss a message.

In a possible implementation, the method further includes: obtaining a user status before determining the first reminder moment, where the user status indicates a current physical status of a user or a status of an environment in which the user is currently located; and determining the first reminder moment of the first service based on the first service type and the first service time specifically includes: determining the first reminder moment based on the first service type, the first service time, and the user status.

In a possible implementation, determining the first message based on the first service type, the first reminder moment, and the first service content specifically includes: determining the first message based on the first service type, the first reminder moment, the user status, and the first service content.

In this way, the first reminder moment and the first message can vary with a different user status.

In a possible implementation, the method further includes: obtaining a user tag before determining the first reminder moment, where the user tag indicates a preference of the user; and determining the first reminder moment of the first service based on the first service type and the first service time specifically includes: determining the first reminder moment based on the first service type, the first service time, and the user tag.

In a possible implementation, determining the first message based on the first service type, the first reminder moment, and the first service content specifically includes: determining the first message based on the first service type, the first reminder moment, the user tag, and the first service content.

In this way, the first reminder moment and the first message can vary with a different user tag.

In a possible implementation, the method further includes: displaying a first interface in an entire area of a display of the first electronic device before arrival of the first reminder moment; and displaying the first notification based on the first message specifically includes: displaying the first interface in a first area of the display, and displaying the first notification in a second area of the display based on the first message, where the first area and the second area do not overlap each other.

In this way, the first notification can be displayed when the first interface is kept being displayed, to avoid affecting viewing of content of a current interface by the user.

In a possible implementation, the method further includes: receiving a first operation of the user, where the first operation is performed on a display area of the first notification; and in response to the first operation, displaying first content of the first message in the entire area of the display, where an information amount of the first content is greater than an information amount of the first notification.

In this way, more content of the first message can be displayed based on a user operation.

In a possible implementation, the first content of the first message is a part or all of content of the first message.

In a possible implementation, the method further includes: after displaying a second interface, receiving a second operation performed by the user on the second interface; and in response to the second operation, displaying the first interface in the first area of the display, and displaying the first notification in the second area of the display.

In a possible implementation, the method further includes: receiving a third operation performed by the user on the first interface; and displaying the first interface in the entire area of the display in response to the third operation; or detecting that display duration of the first notification reaches first duration, and displaying the first interface in the entire area of the display.

In this way, a notification display area can be closed in a manual operation manner of the user or in an automatic manner.

In a possible implementation, the method further includes: displaying the first interface in the entire area of the display of the first electronic device after the first reminder moment; receiving a fourth operation performed by the user on the first interface; and in response to the fourth operation, displaying the first interface in the first area of the display, and displaying the first notification in the second area of the display.

In this way, the notification display area can be started based on the user operation, and the first notification can be displayed.

In a possible implementation, the method further includes: obtaining second service data sent by a second application, where the second service data includes a second service type, second service time, and second service content; determining a second reminder moment of a second service based on the second service type and the second service time; determining a second message based on the second service type, the second reminder moment, and the second service content; and detecting arrival of the second reminder moment, and displaying a second notification based on the second message.

In a possible implementation, the method further includes: before arrival of the second reminder moment, displaying the first interface in the first area of the display, and displaying the first notification in the second area of the display, where the first area and the second area do not overlap each other; and displaying the second notification specifically includes: displaying the first interface in a third area, displaying the first notification in a fourth area, and displaying the second notification in a fifth area, where the third area, the fourth area, and the fifth area are areas of the display that do not overlap each other.

In this way, a plurality of notifications can be displayed in a plurality of sub-areas of the notification display area.

In a possible implementation, the method further includes: receiving and responding to a fifth operation performed by the user on a current interface, or detecting that display duration of the second notification reaches the first duration; displaying the first interface in the first area of the display; and displaying the first notification in the second area of the display.

In this way, one sub-area of the notification display area can be closed.

In a possible implementation, the method further includes: receiving a sixth operation performed by the user on a current interface; and displaying the first interface in the entire area of the display in response to the sixth operation.

In this way, all sub-areas of the notification display area can be closed.

In a possible implementation, the method further includes: before arrival of the second reminder moment, displaying the first interface in the first area of the display, and displaying the first notification in the second area of the display, where the first area and the second area do not overlap each other; and displaying the second notification specifically includes: detecting that the display duration of the first notification reaches second duration, or receiving and responding to an operation of switching a notification by the user; stopping displaying the first notification; and displaying the second notification in the second area.

In this way, a notification displayed in the notification display area can be switched in a manual switching manner or an automatic switching manner.

In a possible implementation, the method further includes: before arrival of the second reminder moment, displaying the first interface in the first area of the display, and displaying the first notification in the second area of the display, where the first area and the second area do not overlap each other; and displaying the second notification specifically includes: displaying, in the second area, the first notification and the second notification that are in motion.

In this way, one or more moving notifications can be displayed in the notification display area in a rotation display manner.

In a possible implementation, the first reminder moment is earlier than the second reminder moment, and before arrival of the first reminder moment, the method further includes: displaying the first interface in the entire area of the display; receiving a seventh operation performed by the user on the first interface; and in response to the seventh operation, displaying the first interface in the first area of the display, and displaying the first notification in the second area of the display.

In this way, a notification with a short time interval between a reminder moment and current time can be preferentially displayed.

In a possible implementation, the method further includes: determining a first priority of the first service based on the first service type; determining a second priority of the second service based on the second service type, where the first priority is higher than the second priority; displaying the first interface in the entire area of the display; receiving a seventh operation performed by the user on the first interface; and in response to the seventh operation, displaying the first interface in the first area of the display, and displaying the first notification in the second area of the display.

In this way, a notification with a higher priority can be preferentially displayed.

In a possible implementation, determining the first priority of the first service based on the first service type specifically includes: determining the first priority of the first service based on the first service type and the user status; determining the priority of the first service based on the first service type and the user tag; or determining the first priority of the first service based on the first service type, the user tag, and the user status.

In a possible implementation, the first application is installed in the first electronic device or a second electronic device, and a communication connection is established between the second electronic device and the first electronic device.

According to a second aspect, this application provides a message push system, including a first electronic device and a second electronic device, where the second electronic device is configured to obtain first service data sent by a first application, where the first service data includes a first service type, first service time, and first service content; the second electronic device is configured to determine a first reminder moment of a first service based on the first service type and the first service time; the second electronic device is configured to determine a first message based on the first service type, the first reminder moment, and the first service content; the second electronic device is configured to send the first message and the first reminder moment to the first electronic device; and the first electronic device is configured to: when detecting arrival of the first reminder moment, display a first notification based on the first message.

In a possible implementation, the second electronic device is further configured to obtain a user status before determining the first reminder moment, where the user status indicates a current physical status of a user or a status of an environment in which the user is currently located; and determining the first reminder moment of the first service based on the first service type and the first service time specifically includes: determining the first reminder moment based on the first service type, the first service time, and the user status.

In a possible implementation, determining the first message based on the first service type, the first reminder moment, and the first service content specifically includes: determining the first message based on the first service type, the first reminder moment, the user status, and the first service content.

In a possible implementation, the second electronic device is further configured to obtain a user tag before determining the first reminder moment, where the user tag indicates a preference of the user; and determining the first reminder moment of the first service based on the first service type and the first service time specifically includes: determining the first reminder moment based on the first service type, the first service time, and the user tag.

In a possible implementation, determining the first message based on the first service type, the first reminder moment, and the first service content specifically includes: determining the first message based on the first service type, the first reminder moment, the user tag, and the first service content.

In a possible implementation, the first electronic device is further configured to display a first interface in an entire area of a display of the first electronic device before arrival of the first reminder moment; and displaying the first notification based on the first message specifically includes: displaying the first interface in a first area of the display, and displaying the first notification in a second area of the display based on the first message, where the first area and the second area do not overlap each other.

In a possible implementation, the first electronic device is further configured to receive a first operation of the user, where the first operation is performed on a display area of the first notification; and in response to the first operation, display first content of the first message in the entire area of the display, where an information amount of the first content is greater than an information amount of the first notification. The first content includes a part or all of content of the first message.

In a possible implementation, the first electronic device is further configured to: after displaying a second interface, receive a second operation performed by the user on the second interface; and the first electronic device is further configured to: in response to the second operation, display the first interface in the first area of the display, and display the first notification in the second area of the display.

In a possible implementation, the first electronic device is further configured to receive a third operation performed by the user on the first interface; and the first electronic device is further configured to display the first interface in the entire area of the display in response to the third operation; or the first electronic device is further configured to: detect that display duration of the first notification reaches first duration, and display the first interface in the entire area of the display.

In a possible implementation, the first electronic device is further configured to display the first interface in the entire area of the display of the first electronic device after the first reminder moment; the first electronic device is further configured to receive a fourth operation performed by the user on the first interface; and the first electronic device is further configured to: in response to the fourth operation, display the first interface in the first area of the display, and display the first notification in the second area of the display.

In a possible implementation, the second electronic device is further configured to obtain second service data sent by a second application, where the second service data includes a second service type, second service time, and second service content; the second electronic device is configured to determine a second reminder moment of a second service based on the second service type and the second service time; the second electronic device is configured to determine a second message based on the second service type, the second reminder moment, and the second service content; the second electronic device is configured to send the second message and the second reminder moment to the first electronic device; and the first electronic device is further configured to: detect arrival of the second reminder moment, and display a second notification based on the second message.

In a possible implementation, the first electronic device is further configured to: before arrival of the second reminder moment, display the first interface in the first area of the display, and display the first notification in the second area of the display, where the first area and the second area do not overlap each other; and displaying the second notification specifically includes: displaying the first interface in a third area, displaying the first notification in a fourth area, and displaying the second notification in a fifth area, where the third area, the fourth area, and the fifth area are areas of the display that do not overlap each other.

In a possible implementation, the first electronic device is further configured to: receive and respond to a fifth operation performed by the user on a current interface, or detect that display duration of the second notification reaches the first duration; display the first interface in the first area of the display; and display the first notification in the second area of the display.

In a possible implementation, the first electronic device is further configured to receive a sixth operation performed by the user on a current interface; and the first electronic device is further configured to display the first interface in the entire area of the display in response to the sixth operation.

In a possible implementation, the first electronic device is further configured to: before arrival of the second reminder moment, display the first interface in the first area of the display, and display the first notification in the second area of the display, where the first area and the second area do not overlap each other; and displaying the second notification specifically includes: detecting that the display duration of the first notification reaches second duration, or receiving and responding to an operation of switching a notification by the user; stopping displaying the first notification; and displaying the second notification in the second area.

In a possible implementation, the first electronic device is further configured to: before arrival of the second reminder moment, display the first interface in the first area of the display, and display the first notification in the second area of the display, where the first area and the second area do not overlap each other; and displaying the second notification specifically includes: displaying, in the second area, the first notification and the second notification that are in motion.

In a possible implementation, the first reminder moment is earlier than the second reminder moment. Before arrival of the first reminder moment, the first electronic device is further configured to display the first interface in the entire area of the display; the first electronic device is further configured to receive a seventh operation performed by the user on the first interface; and the first electronic device is further configured to: in response to the seventh operation, display the first interface in the first area of the display, and display the first notification in the second area of the display.

In a possible implementation, the second electronic device is further configured to determine a first priority of the first service based on the first service type; the second electronic device is further configured to determine a second priority of the second service based on the second service type, where the first priority is higher than the second priority; the first electronic device is further configured to display the first interface in the entire area of the display; the first electronic device is further configured to receive a seventh operation performed by the user on the first interface; and the first electronic device is further configured to: in response to the seventh operation, display the first interface in the first area of the display, and display the first notification in the second area of the display.

In a possible implementation, determining the first priority of the first service based on the first service type specifically includes: determining the first priority of the first service based on the first service type and the user status; determining the priority of the first service based on the first service type and the user tag; or determining the first priority of the first service based on the first service type, the user tag, and the user status.

In a possible implementation, the first application is installed in the first electronic device or the second electronic device, and a communication connection is established between the second electronic device and the first electronic device.

According to a third aspect, this application provides an electronic device. The electronic device is a first electronic device and includes one or more processors and one or more memories. The one or more memories are coupled to the one or more processors. The one or more memories are configured to store computer program code, and the computer program code includes computer instructions. When the one or more processors execute the computer instructions, the first electronic device is caused to perform the message push method according to any possible implementation of any one of the foregoing aspects.

According to a fourth aspect, an embodiment of this application provides a computer storage medium, including computer instructions. When the computer instructions are run on a first electronic device, the first electronic device is caused to perform the message push method according to any possible implementation of any one of the foregoing aspects.

According to a fifth aspect, an embodiment of this application provides a computer program product. When the computer program product runs on a first electronic device, the first electronic device is caused to perform the message push method according to any possible implementation of any one of the foregoing aspects.

For beneficial effects brought by the second aspect to the fifth aspect, refer to beneficial effects brought by the first aspect.

### BRIEF DESCRIPTION OF DRAWINGS

FIG. 1A is a diagram of a device form of an electronic device 100 according to an embodiment of this application;
FIG. 1B is a diagram of a hardware structure of an electronic device 100 according to an embodiment of this application;
FIG. 1C is a diagram of a software architecture of an electronic device 100 according to an embodiment of this application;
FIG. 2A and FIG. 2B are a diagram of a module interaction procedure of a message push method according to an embodiment of this application;
FIG. 3A to FIG. 3D are diagrams of a group of interfaces for starting a notification display area by an electronic device 100 according to an embodiment of this application;
FIG. 4A to FIG. 4C are diagrams of a group of interfaces for starting a plurality of sub-areas of a notification display area by an electronic device 100 according to an embodiment of this application;
FIG. 5A to FIG. 5C are diagrams of a group of interfaces for displaying a plurality of notifications by an electronic device 100 in a rotation manner according to an embodiment of this application;
FIG. 6A to FIG. 6D are diagrams of a group of interfaces for obtaining a user tag by an electronic device 100 according to an embodiment of this application;
FIG. 7 is a schematic flowchart of a message push method according to an embodiment of this application;
FIG. 8 is a diagram of a system architecture of a message push system 10 according to an embodiment of this application;
FIG. 9 is a diagram of functional modules of a message push system 10 according to an embodiment of this application; and
FIG. 10 is a schematic flowchart of a message push method according to an embodiment of this application.

### DESCRIPTION OF EMBODIMENTS

The technical solutions according to embodiments of this application are clearly and completely described in the following with reference to the accompanying drawings. In descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in descriptions of embodiments of this application, "a plurality of" means two or more than two.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

The term "user interface (user interface, UI)" in the following embodiments of this application is a medium interface for interaction and information exchange between an application or an operating system and a user. The user interface implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphic manner. The user interface may be a visual interface element like a text, an icon, a button, a menu, a tab, a text box, a dialog box, a status bar, a navigation bar, or a widget that is displayed on a display of an electronic device.

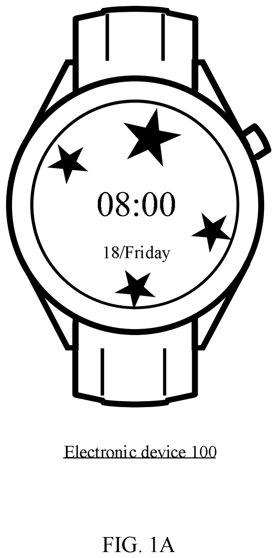

FIG. 1A is a diagram of a device form of an electronic device 100 according to an embodiment of this application.

As shown in FIG. 1A, the electronic device 100 may include a watch body and a watch strap, and one or more buttons (for example, a watch crown) may be further disposed on the watch body. The watch body includes a display, and the watch body may display content such as a watch face, an application interface, and a message on the display. The display disposed on the watch body may be circular, square, or another shape.

It may be understood that the embodiment shown in FIG. 1A is merely an example. In this embodiment of this application, the electronic device 100 may be the watch shown in FIG. 1A, or may be another wearable device such as a band. This is not limited in this application.

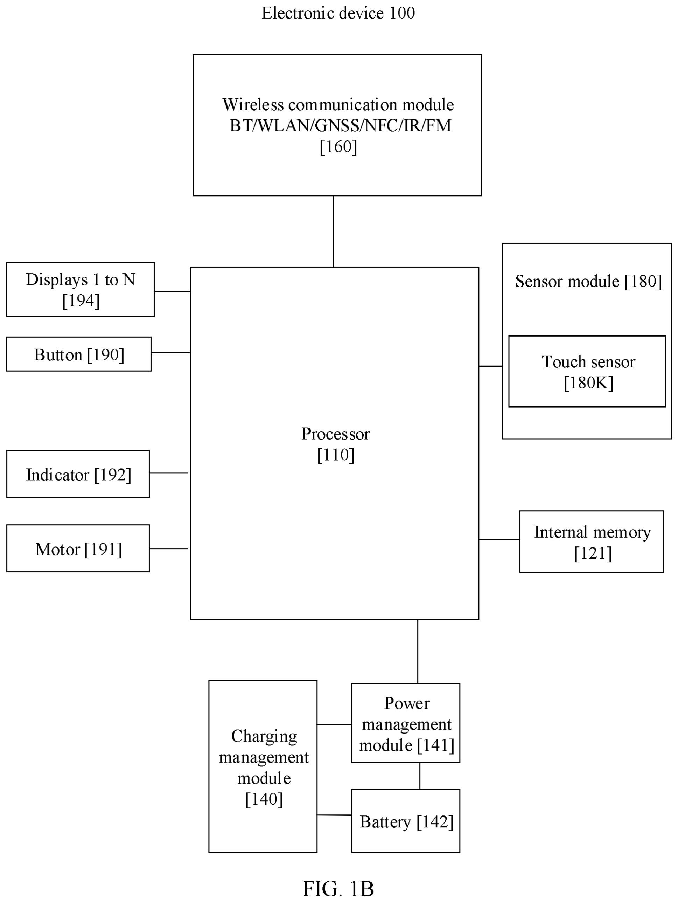

FIG. 1B is a diagram of a hardware structure of an electronic device 100 according to an embodiment of this application.

The electronic device 100 may be a wearable device, for example, a watch or a band.

The electronic device 100 may include a processor 110, an internal memory 121, a charging management module 140, a power management module 141, a battery 142, a wireless communication module 160, a sensor module 180, a button 190, a display 194, and the like. The sensor module 180 may include a touch sensor 180K. In some embodiments, the sensor module 180 may further include one or more of sensors such as a photoelectric sensor, a capacitive sensor, a gyroscope sensor, and an acceleration sensor. In some embodiments, the electronic device 100 may further include one or more of components such as an audio module, a motor 191, and an indicator 192.

It may be understood that the structure shown in this embodiment of the present invention does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. The controller may generate an operation control signal based on instruction operation code and a time sequence signal, to complete control of instruction reading and instruction execution. A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and therefore improves system efficiency.

The charging management module 140 is configured to receive charging input from a charger. The charger may be a wireless charger or a wired charger. In some embodiments in which the charger is a wired charger, the charging management module 140 may receive a charging input from the wired charger through a USB interface. In some embodiments in which the charger is a wireless charger, the charging management module 140 may receive a wireless charging input through a wireless charging coil of the electronic device 100. The charging management module 140 supplies power to the electronic device through the power management module 141 when charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

The wireless communication module 160 may provide a wireless communication solution that is applied to the electronic device 100 and that includes any one or more of a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change displayed information.

The display 194 is configured to display an image, a video, and the like. The display 194 includes a display panel. The display panel may be a liquid crystal display (liquid crystal display, LCD). The display panel may alternatively be an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or more displays 194.

The internal memory 121 may include one or more random access memories (random access memories, RAMs) and one or more non-volatile memories (non-volatile memories, NVMs). The random access memory may be directly read and written by using the processor 110. The random access memory may be configured to store an executable program (for example, machine instructions) in an operating system or another running program, and may be further configured to store data of a user, data of an application, and the like. The non-volatile memory may also store an executable program, data of a user and an application, and the like, which may be pre-loaded to the random access memory for the processor 110 to directly perform a read or write operation.

The audio module may be configured to convert digital audio information into an analog audio signal for output, and is also configured to convert an analog audio input into a digital audio signal. The audio module may be further configured to: encode and decode an audio signal. In some embodiments, the audio module may be disposed in the processor 110, or some functional modules in the audio module are disposed in the processor 110.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor 180K may alternatively be disposed on a surface of the electronic device 100 at a location different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

A software system of the electronic device 100 may use a layered architecture, an event-driven architecture, a microkernel architecture, a micro service architecture, or a cloud architecture. In a layered architecture, software is divided into several layers, and each layer has a clear role and task. The layers communicate with each other through a software interface.

The following describes a software architecture of the electronic device 100 according to an embodiment of this application.

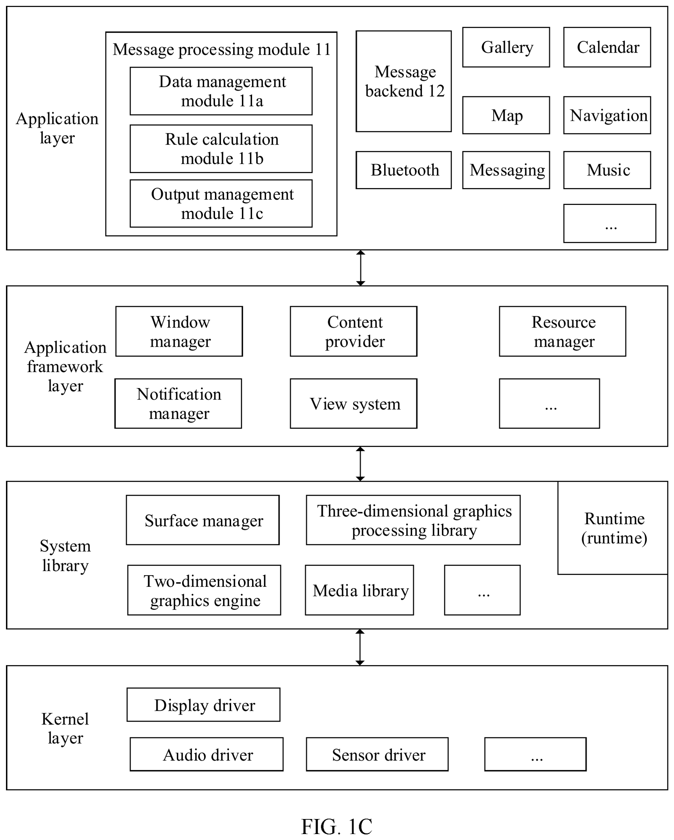

As shown in FIG. 1C, the software architecture of the electronic device 100 may include four layers: an application layer, an application framework layer, a runtime (runtime) and system library, and a kernel layer from top to bottom.

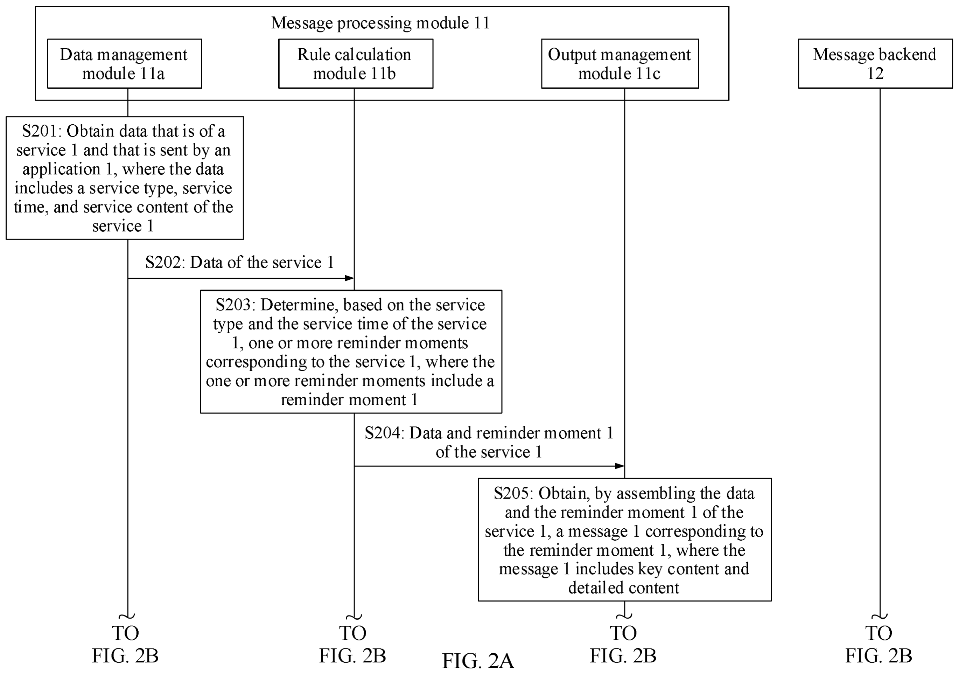

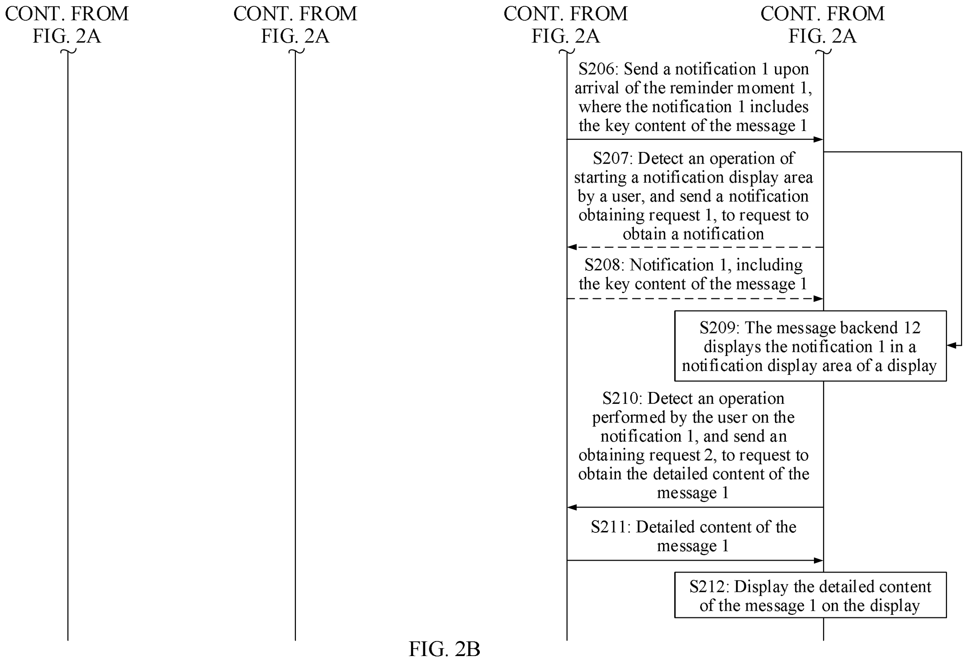

The application layer may include a message processing module 11, a message backend 12, and a series of application packages. The message processing module 11 may include a data management module 11a, a rule calculation module 11b, and an output management module 11c. The application packages may include applications such as Calendar, Map, Navigation, Bluetooth, Music, and Messaging. For specific function descriptions of the message processing module 11 and the message backend 12, refer to related descriptions in the following embodiment shown in FIG. 2A and FIG. 2B.

The application framework layer provides an application programming interface (application programming interface, API) and a programming framework for an application at the application layer. The application framework layer includes some predefined functions. The application framework layer may include a window manager, a content provider, a view system, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, a browsing history, a bookmark, and the like.

The view system includes visual controls such as a control for displaying a text and a control for displaying an image. The view system may be used to construct an application. A display interface may include one or more views. For example, a display interface including an SMS message notification icon may include a text display view and an image display view.

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or an indicator blinks.

The runtime may include a core library and a virtual machine, and the runtime may be responsible for system scheduling and management.

The core library includes two parts: a performance function that needs to be invoked in Java language, and a core library of the operating system.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playing and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, an audio driver, and a sensor driver.

It may be understood that the embodiment shown in FIG. 1C is merely an example. In this embodiment of this application, the software architecture of the electronic device 100 may alternatively use an architecture different from that in the embodiment shown in FIG. 1C, or each layer may include more or fewer modules than those in the foregoing embodiment, or modules different from those in the foregoing embodiment. This is not limited in this application.

This application provides a message push method. The method is applied to the electronic device 100. The method includes: obtaining first service data sent by a first application, where the first service data includes a first service type, first service time, and first service content; determining a first reminder moment of a first service based on the first service type and the first service time; determining a first message based on the first service type, the first reminder moment, and the first service content; and detecting arrival of the first reminder moment, and displaying a first notification based on the first message. In this way, a message can be pushed based on a reminder moment, to avoid simultaneous push of a plurality of messages and therefore a user does not miss a message.

The following describes a module interaction procedure for an electronic device 100 to perform a message push method according to an embodiment of this application.

The electronic device 100 may include the following modules: a message processing module 11, a message backend 12, and the like. The message processing module 11 may include a data management module 11a, a rule calculation module 11b, and an output management module 11c.

As shown in FIG. 2A and FIG. 2B, when a message push system 10 performs the message push method, an interaction procedure of modules in the message push system 10 may include the following steps.

S201: The data management module 11a obtains data that is of a service 1 and that is sent by an application 1, where the data includes a service type, service time, and service content of the service 1.

The data management module 11a may obtain data (also referred to as service data) that is of one or more services and that is sent by an application of a specified type. The application of a specified type may include any one or more of the following: a sports application, a health application, a travel application, a ticketing application, a calendar application, a weather application, a conference application, and the like. The application of a specified type may include a self-developed application (for example, a sports and health application or a sleep monitoring application), or may include a third-party application (for example, a taxi application). The application of a specified type may include a plurality of applications. The plurality of applications may include an application installed in the electronic device 100 (for example, a watch), or may include an application installed in a mobile phone (or another electronic device) that establishes a communication connection to the electronic device 100.

In some embodiments, when generating data of a service, an application (for example, the application 1) of the specified type may send the data of the service to the data management module 11a. In some other embodiments, the data management module 11a may alternatively obtain, at a fixed time interval from a plurality of applications of the specified type, data that is of one or more services and that is generated by the applications.

Data of each service may include a service type, service time, and service content of the service. Optionally, the data of the service may further include a name of an application that sends the data of the service and/or an icon of the application.

The service type may include any one or more of the following: a travel service, a health service, a sports service, a weather service, a calendar service, and the like. Some service types may further include one or more service subtypes. For example, the travel service may include an air trip, a high-speed railway trip, a train trip, a taxi trip, a cruise trip, and the like. The health service may include blood glucose monitoring, sleep monitoring, blood pressure monitoring, heart rate monitoring, and the like. The calendar service may include a conference arrangement, a lunch arrangement, a medication arrangement, and the like. The sports service may include an outdoor jogging arrangement, a yoga arrangement, a swimming arrangement, a volleyball arrangement, and the like. It may be understood that the service types and the service subtypes enumerated in this embodiment herein are merely some examples. In this embodiment of this application, the service types may include more or fewer service types than those in the foregoing embodiment, or service types different from those in the foregoing embodiment, and service subtypes of different service types may also include more or fewer service subtypes than those in the foregoing embodiment, or service subtypes different from those in the foregoing embodiment. This is not limited in this application.

In some embodiments, the service time may be planned time (also referred to as predetermined time) at which a service is to occur. For example, when the service type is an air trip, the service time is departure time and arrival time of the air trip. In some other embodiments, the service time may alternatively be time at which an application executes a service. For example, when the service type is heart rate monitoring, the service time may be a moment at which a heart rate application (or a health application) performs heart rate monitoring.

The service content varies with service types. For example, when the service type is an air trip, the service content may include a flight, a place of departure, a destination, a check-in counter, a boarding gate, and the like. When the service type is a taxi trip, the service content may include a vehicle type, a license plate number, a driver name, a driver score, a taxi fare, a driving route, and the like. When the service type is sleep monitoring, the service content may include total sleep duration, nap duration, sleep quality, sleep onset latency, and the like of a user in a time period corresponding to the service time.

In some embodiments, the data management module 11a may further obtain a user status and a user tag. The user status may include any one or more of the following: a health status, an exercise status, a suboptimal health status, an emergency status, a high-temperature environment status, a rainstorm environment status, and the like. The user tag may indicate a personalized preference of the user, and the user tag may include any one or more of the following: sports, health, health care, tourism, diet, leisure, and the like. The user status may be determined based on service data obtained by the data management module 11a from applications such as a weather application, the health application, and a sports application. For example, after obtaining weather data sent by the weather application, the data management module 11a may determine that the user status is currently the high-temperature environment status. The user tag may be determined based on a tag selected by the user. In some embodiments, after the electronic device 100 is successfully paired with a mobile phone (or another electronic device) for the first time, the electronic device 100 may push, to the user by using any one of applications of a specified type (for example, the sports and health application), a plurality of tags for selection by the user, and determine a user tag based on a selection result of the user. It may be understood that, in some other embodiments, when the electronic device 100 is successfully paired with the mobile phone for the first time, the electronic device 100 may further obtain a user tag previously selected by the user from some applications (such as the sports and health application and a sleep application) of the mobile phone. In some other embodiments, the electronic device 100 may alternatively push a plurality of tags to the user periodically (for example, every other month) by using an application of a specified type, and update the user tag based on a selection of the user. It may be understood that the embodiments herein are merely some examples. In this embodiment of this application, the electronic device 100 may alternatively push a tag to the user on another occasion for selection by the user. This is not limited in this application.

In some embodiments, a plurality of icons of the applications of a specified type may be further preset in the data management module 11a. After the service data sent by the application (for example, the application 1) is received, an icon of the application 1 may be determined based on a service type (or an application name) in the service data.

S202: The data management module 11a sends the data of the service 1 to the rule calculation module 11b.

In some embodiments, in addition to the data of the service 1, the data management module 11a may send the user status and the user tag to the rule calculation module 11b. Optionally, the icon of the application 1 may be further sent.

S203: The rule calculation module 11b determines, based on the service type and the service time of the service 1, one or more reminder moments corresponding to the service 1, where the one or more reminder moments include a reminder moment 1.

One service may correspond to one or more reminder moments.

The rule calculation module 11b may determine, based on the service type and the service time of the service 1 and a message output rule, a reminder moment corresponding to the service 1. The rule calculation module 11b may store a correspondence between the service type and an interval between the reminder moment and the service time.

For example, Table 1 shows the correspondence between the service type and the interval between the reminder moment and the service time.

**Table 1**

| Service type | Interval between the service time and the reminder moment |
|---|---|
| Air trip | 24 hours, 4 hours, 3 hours, 2 hours, and 1 hour before the service time |
| Conference arrangement | 30 minutes and 5 minutes before the service time |
| Taxi trip | 15 minutes and 5 minutes before the service time |
| Sleep monitoring | 15 minutes after the service time |

As shown in Table 1, the rule calculation module 11b may determine the interval between the service time and the reminder moment based on the service type. For example, when the service type is an air trip, the interval between the service time and the reminder moment is 24 hours, 4 hours, 3 hours, 2 hours, and 1 hour before the service time. When the service type is a conference arrangement, the interval between the service time and the reminder moment is 30 minutes and 5 minutes before the service time. When the service type is a taxi trip, the interval between the service time and the reminder moment is 15 minutes and 5 minutes before the service time. When the service type is sleep monitoring, the interval between the service time and the reminder moment is 15 minutes after the service time.

It may be understood that the embodiment shown in Table 1 is merely an example. In this embodiment of this application, the correspondence that is between the service type and the interval between the reminder moment and the service time and that is stored by the rule calculation module 11b may include more or fewer service types than those in Table 1, or service types (or service subtypes) different from those in Table 1. This is not limited in this application.

In some other embodiments, the rule calculation module 11b may further store the correspondence between the service type and the interval between the reminder moment and the service time in the case of a different user tag and/or a different user status.

For example, Table 2 shows the correspondence between the service type and the interval between the reminder moment and the service time in the case of a different user tag.

**Table 2**

| User tag | Service type | Interval between the service time and the reminder moment |
|---|---|---|
| Sports | Outdoor jogging arrangement | 1 hour, 30 minutes, and 5 minutes before the service time |
| Travel | Outdoor jogging arrangement | 15 minutes before the service time |
| Health | Blood pressure monitoring | 5 minutes after the service time |
| Travel | Blood pressure monitoring | 30 minutes after the service time |

As shown in Table 2, the rule calculation module 11b may determine the interval between the service time and the reminder moment based on the service type and the user tag. For example, when the user tag is sports and the service type is an outdoor jogging arrangement, the interval between the service time and the reminder moment is 1 hour, 30 minutes, and 5 minutes before the service time. When the user tag is tourism and the service type is an outdoor jogging arrangement, the interval between the service time and the reminder moment is 15 minutes before the service time. When the user tag includes health and the service type is blood pressure monitoring, the interval between the service time and the reminder moment is 5 minutes after the service time. When the user tag includes tourism and the service type is blood pressure monitoring, the interval between the service time and the reminder moment is 30 minutes after the service time.

It may be understood that the embodiment shown in Table 2 merely describes an example in which the interval, between the service time and the reminder moment, corresponding to the service type may vary with a different user tag. In this embodiment of this application, the user tag may also include more or fewer tags than those in Table 2, or tags different than those in Table 2, and the interval, between the service time and the reminder moment, corresponding to the user tag and the service type may also be different from those in the embodiment shown in Table 2. This is not limited in this application.

For another example, Table 3 shows the correspondence between the service type and the interval between the reminder moment and the service time in the case of a different user status.

**Table 3**

| User status | Service type | Interval between the service time and the reminder moment |
|---|---|---|
| Health status | Outdoor jogging arrangement | 1 hour, 30 minutes, and 5 minutes before the service time |
| Suboptimal health status | Outdoor jogging arrangement | 2 hours and 45 minutes before the service time |
| High-temperature environment status | Outdoor jogging arrangement | 10 minutes before the service time |

As shown in Table 3, the rule calculation module 11b may determine the interval between the service time and the reminder moment based on the service type and the user status. For example, when the user status is a healthy status and the service type is an outdoor jogging arrangement, the interval between the service time and the reminder moment is 1 hour, 30 minutes, and 5 minutes before the service time. When the user status is a suboptimal health status and the service type is an outdoor jogging arrangement, the interval between the service time and the reminder moment is 2 hours and 45 minutes before the service time. When the user status is a high-temperature environment status and the service type is an outdoor jogging arrangement, the interval between the service time and the reminder moment is 10 minutes before the service time.

It may be understood that the embodiment shown in Table 3 merely describes an example in which the interval, between the service time and the reminder moment, corresponding to the service type may vary with a different user status. In this embodiment of this application, the user status may also include more or fewer statuses than those in Table 3, or statuses different than those in Table 3, and the interval, between the service time and the reminder moment, corresponding to the user status and the service type may also be different from those in the embodiment shown in Table 3. This is not limited in this application.

After the interval between the service time and the reminder moment is determined, the rule calculation module 11b may obtain the one or more reminder moments of the service 1 based on the service time, where the one or more reminder moments may include the reminder moment 1.

In some embodiments, the rule calculation module 11b may further determine a priority of the service 1 based on the service type of the service 1.

For example, Table 4 shows a correspondence between a service type of a service and a priority of the service provided in this embodiment of this application.

**Table 4**

| Service type | Priority of the service |
|---|---|
| Air trip | High |
| Conference arrangement | High |
| Taxi trip | Medium |
| Sleep monitoring | Low |

As shown in Table 4, the rule calculation module 11b may determine the priority of the service based on the service type. For example, when the service type is an air trip, the priority of the service is high. When the service type is a conference arrangement, the priority of the service is high. When the service type is a taxi trip, the priority of the service is medium. When the service type is sleep monitoring, the priority of the service is low.

It may be understood that the embodiment shown in Table 4 is merely an example. In this embodiment of this application, the rule calculation module 11b may store more or fewer service types or priorities that are different from those in Table 4. A correspondence between the service type and the priority may alternatively be different from that in the embodiment shown in Table 4. This is not limited in this application.

In some other embodiments, the rule calculation module 11b may further store the correspondence between the service type and the priority of the service in the case of a different user tag and/or a different user status. In this case, the rule calculation module 11b may alternatively determine the priority of service based on the user tag or the user status, and the service type. For example, when the user tag includes sports, a priority of a service whose service type is a sports service (for example, an outdoor jogging arrangement or a swimming arrangement) may be higher than a priority of the sports service in the case of another user tag. For another example, when the user status is a suboptimal health status, a priority of a health service (for example, blood pressure monitoring and heart rate monitoring) may be higher than a priority of the health service in another user status. In some other embodiments, the rule calculation module 11b may alternatively determine the priority of the service based on the user tag, the user status, and the service type. This is not limited in this application.

S204: The rule calculation module 11b sends the data of the service 1 and the reminder moment 1 to the output management module 11c.

Optionally, the rule calculation module 11b may also send the priority of the service 1 to the output management module 11c. Further, optionally, the icon of the application 1 may be sent.

In some embodiments, if the reminder moment 1 is later than current time, the rule calculation module 11b may send the data of the service 1 and the reminder moment 1 to the output management module 11c when a time interval from the reminder moment 1 is preset duration (for example, 1 minute or 1 second). If the reminder moment point 1 is earlier than current time, the rule calculation module 11b may send the data of the service 1 and the reminder moment 1 of the service 1 to the output management module after arrival of the reminder moment 1.

In some other embodiments, if the service 1 corresponds to a plurality of reminder moments earlier than the current time, and the reminder moment 1 is the latest moment of the plurality of reminder moments earlier than the current time, the rule calculation module 11b may send the reminder moment 1, all reminder moments later than the reminder moment 1, and the data of the service 1 to the output management module.

In some other embodiments, the rule calculation module 11b may alternatively send the data of the service 1 and all reminder moments corresponding to the service 1 to the output management module 11c after determining all the reminder moments corresponding to the service 1.

S205: The output management module 11c obtains, by assembling the data and the reminder moment 1 of the service 1, a message 1 corresponding to the reminder moment 1, where the message 1 includes key content and detailed content.

The output management module 11c may store a correspondence between the service type, the reminder moment, and a keyword, where the keyword may be used to extract the key content of the message 1 from the service content.

For example, Table 5 shows the correspondence between the service type, the reminder moment, and the keyword provided in this embodiment of this application.

**Table 5**

| Service type | Reminder moment | Keyword |
|---|---|---|
| Air trip | 24 hours, 4 hours, 3 hours, and 2 hours before departure | Departure time |
| Air trip | 1 hour before departure | Boarding gate |
| Sleep monitoring | 15 minutes after a monitoring result is obtained | Total sleep duration |
| Medication reminder | 10 minutes before scheduled medication time | Medicine name and medication time |

As shown in Table 5, the output management module 11c may determine the keyword based on the service type and the reminder moment. When the service type is an air trip and the reminder moment is 24 hours before departure, 4 hours before departure, 3 hours before departure, or 2 hours before departure, the keyword may be departure time. When the service type is an air trip and the reminder moment is 1 hour before departure, the keyword may be a boarding gate. When the service type is sleep monitoring and the reminder moment is 15 minutes after the monitoring result is obtained, the keyword may be total sleep duration. When the service type is medication reminder and the reminder moment is 10 minutes before predetermined medication time, the keyword may be a medicine name and medication time.

It may be understood that the embodiment shown in Table 5 is merely an example. In this embodiment of this application, the output management module 11c may store more or fewer service types and/or reminder moments that are different from those in Table 5. The correspondence between the service type, the reminder moment, and the keyword may alternatively be different from that in the embodiment shown in Table 5. This is not limited in this application.

After a keyword corresponding to the reminder moment 1 is obtained based on the service type and the reminder moment, the key content of the message 1 may be obtained from the data of the service 1 based on the keyword. For example, if the keyword is departure time and the data of the service 1 includes "flight departure time is 15:07", the key content of the message 1 may be "departure time: 15:07", and the notification 1 may include "departure time: 15:07". Optionally, the notification 1 may further include the icon of the application 1.

In some embodiments, the detailed content of the message 1 may include all content in the service content of the service 1. In this case, the output management module 11c may obtain the detailed content of the message 1 based on the service content in the data of the service 1.

In some other embodiments, the detailed content of the message 1 corresponding to the service 1 may vary with a different user status or a different user tag. The output management module 11c may determine the detailed content of the message 1 based on the user status and/or the user tag, and the service type.

For example, Table 6 shows a correspondence between the service type, the user status, and the detailed content provided in this embodiment of this application.

**Table 6**

| Service type | User status | Detailed content |
|---|---|---|
| Marathon arrangement | Health status | Start point, end point, road condition, and start time |
| Marathon arrangement | Suboptimal health status | Poor physical condition detected. You are not advised exercising violently. |
| Marathon arrangement | High-temperature environment status | Start point, end point, road condition, start time, and high-temperature warning |

As shown in Table 6, the output management module 11c may determine the detailed content of the message based on the service type and the user status. When the service type is a marathon arrangement and the user status is a healthy status, the detailed content may include a start point, an end point, a road condition, start time, and the like of the marathon. When the service type is a marathon arrangement and the user status is a suboptimal health status, the detailed content may include "Poor physical condition detected. You are not advised exercising violently". When the service type is a marathon arrangement and the user status is a high-temperature environment status, the detailed content may include a start point, an end point, a road condition, start time, a high-temperature warning, and the like of the marathon.

It may be understood that the embodiment shown in Table 6 is merely an example for description, and the detailed content of the message 1 may vary with a different user status. In this embodiment of this application, the output management module 11c may store more and fewer service types and/or user statuses that are different from those in Table 6. The correspondence between the service type, the user status, and the detailed content may alternatively be different from that in the embodiment shown in Table 6. This is not limited in this application.

It should be noted that the output management module 11c may obtain one or more messages by assembling the service data and the reminder moment that are sent by the rule calculation module 11b, and store the one or more messages. The output management module 11c may delete all messages corresponding to a service after arrival of service time of the service (for example, after a flight takes off) or after service content of a same service type is received (for example, sleep monitoring service data of a new day is received).

In some embodiments, if the service 1 corresponds to a plurality of reminder moments, for example, a reminder moment 1 and a reminder moment 2, and the reminder moment 1 is later than the reminder moment 2, when the time interval away from the reminder moment 1 is a preset time interval (for example, 1 minute, 1 second, or 1 microsecond), the output management module 11c may assemble the message 1 to be output at the reminder moment, and delete a message corresponding to the reminder moment 2 from the output management module 11c.

S206: The output management module 11c sends the notification 1 to the message backend 12 upon arrival of the reminder moment 1, where the notification 1 includes the key content of the message 1.

Upon arrival of the reminder moment 1, the message backend 12 may receive the notification 1 sent by the output management module 11c. After obtaining the notification 1, the message backend 12 may perform the following step S209.

In some embodiments, the message backend 12 may also obtain the notification 1 from the output management module 11c based on an operation of starting a notification display area by the user. Specific steps may include the following step S207 and step S208.

S207: The message backend 12 detects the operation of starting a notification display area by the user, and sends a notification obtaining request 1 to the output management module 11c, to request to obtain a notification.

The obtaining request 1 is used to request the output management module 11c to send key content of one or more assembled messages to the message backend 12.

S208: The output management module 11c sends the notification 1 to the message backend 12, where the notification 1 includes the key content of the message 1.

After receiving the obtaining request 1 sent by the message backend 12, the output management module 11c may determine, based on one or more pieces of assembled information, that a message sent to the message backend 12 is the message 1, and send the notification 1 corresponding to the message 1 to the message backend 12, where the notification 1 includes the key content of the message 1.

In some embodiments, based on a reminder moment of the one or more messages, the output management module 11c may determine to send, to the message backend 12, the message 1 with a minimum interval between the reminder moment and the current time. In some other embodiments, based on priorities of the one or more messages, the output management module 11c may further determine to send, to the message backend 12, the notification 1 corresponding to the message 1 with a highest priority. A priority of a message may be a priority of a service corresponding to the message.

In some embodiments, if the message 1 in the one or more messages has a highest priority, and one or more messages whose priorities are the same as the priority of the message 1 are further included, the output management module 11c may also send key content of the one or more messages to the message backend 12.

In some embodiments, the one or more assembled messages in the message backend 12 may be classified into a displayed message and an undisplayed message according to whether the messages are displayed. The displayed message may carry a display tag. When receiving the obtaining request 1, the output management module 11c may determine a message with a highest priority (or a message with a shortest reminder moment from the current time) from the undisplayed message, and send a notification including key content of the message to the message backend 12. In this way, the undisplayed message may be preferentially pushed to the user, to the user does not miss a message.

In some embodiments, the output management module 11c may also send, to the message backend 12, the service type corresponding to the message 1 (namely, the service type of the service 1) and/or the priority of the message 1.

S209: The message backend 12 displays the notification 1 in the notification display area of the display.

In some embodiments, if the message backend 12 receives key content of a plurality of messages, the message backend 12 may display a plurality of notifications in the notification display area in a rotation manner, where each notification includes key content of one of the messages. In some other embodiments, the message backend 12 may alternatively display sub-areas of a plurality of notification display areas, and separately display one notification in the sub-areas of the plurality of notification display areas, where each notification includes key content of one of the messages. Optionally, if a quantity of sub-areas in the notification display area is limited, and a maximum quantity of sub-areas is less than a quantity of received messages, the message backend 12 may further display the plurality of notifications in the plurality of sub-areas in a rotation manner. It should be noted that the message backend 12 may display the plurality of notifications in the sub-area in a rotation manner based on a preset rotation speed; or the message backend 12 may switch, based on an operation of switching a notification by the user, a notification displayed in the sub-area. Optionally, when the notification is displayed in a rotation manner, a trailing effect may be further displayed for a moving notification.

In some embodiments, after receiving the key content of the message 1, the message backend 12 may further scale down a currently displayed interface, and display the interface in a main display area except the notification display area. The main display area is an area that is of the display and that does not overlap the notification display area. Optionally, in a process of scaling down the interface, the message backend 12 may further control the display of a rebound dynamic effect of the interface, that is, after the interface is scaled down to the minimum display size, the interface is scaled up and displayed in the main display area.

In some other embodiments, the message backend 12 may further control displaying a dynamic effect of blinking a breathing light around the main display area. The dynamic effect of blinking a breathing light may be implemented by controlling a color, brightness, transparency, and a size change of a background in the main display area. In addition, the message backend 12 may determine a color of the breathing light based on the service type (or the priority) corresponding to the message 1. In this way, based on the color of the breathing light, the user may be prompted for a service type (or a priority) corresponding to the notification.

In some embodiments, the message backend 12 may set maximum display duration of the notification. When it is detected that the display duration of the notification 1 reaches the maximum display duration, the message backend 12 may send the obtaining request 1 to the output management module 11c, and obtain a notification 2 from the output management module 11c, where the notification 2 includes key content of a message with a highest priority (or a minimum interval between a reminder moment and a current moment) in an undisplayed assembled message. Then, the message backend 12 may stop displaying the notification 1, but display the notification 2 in the notification display area. When the assembled message in the output management module 11c does not include an undisplayed message, the output management module 11c may send a close instruction to the message backend 12, and the message backend 12 may close the notification display area after receiving the close instruction. In this way, the maximum display duration of the notification is controlled, so that all assembled messages can be sequentially displayed, to avoiding missing for the user.

S210: The message backend 12 detects an operation performed by the user on the notification 1, and sends an obtaining request 2 to the output management module 11c to request to obtain the detailed content of the message 1.

S211: The output management module 11c sends the detailed content of the message 1 to the message backend 12.

S212: The message backend 12 displays the detailed content of the message 1 on the display.

According to the message push method provided in this embodiment of this application, the electronic device 100 can obtain service data sent by an application on the electronic device 100 (and/or a mobile phone paired with the electronic device 100), and intelligently plan push occasions and push priorities of notifications corresponding to different services. This can avoid a case in which a plurality of notifications block each other, so that the user can sequentially view different notifications as required, and the user can also be prevented from missing viewing.

The following describes an interface diagram of a message push method according to an embodiment of this application.

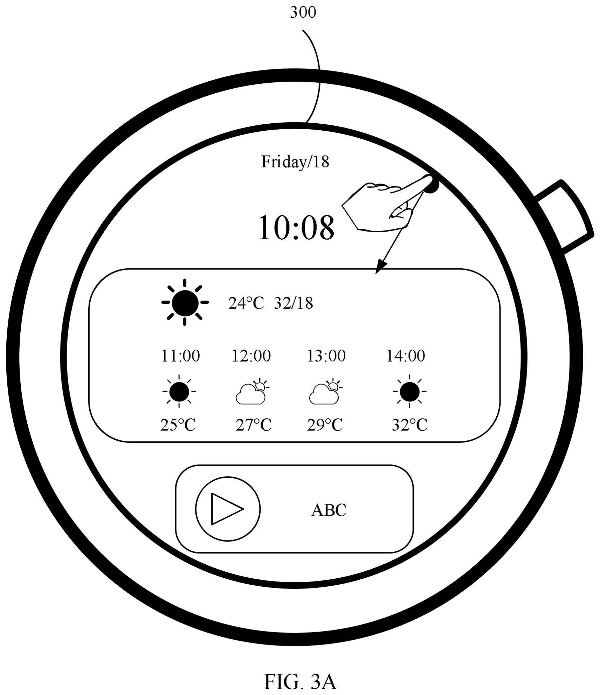

For example, as shown in FIG. 3A, an electronic device 100 displays a main interface 300, and the main interface 300 may occupy an entire area of a display.

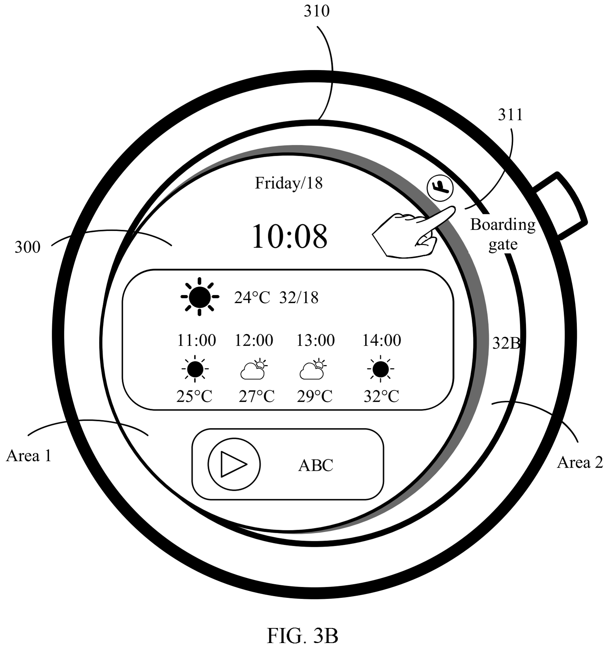

In some embodiments, when detecting arrival of a reminder moment 1 of a message 1, the electronic device 100 may start a notification display area, to display a notification interface 310 shown in FIG. 3B.

As shown in FIG. 3B, the display of the electronic device 100 may include an area 1 and an area 2, where the area 1 and the area 2 are two areas that do not overlap each other. The area 1 may be a circular area shown in FIG. 3B, and the area 2 may be a crescent area shown in FIG. 3B. In some other embodiments, the area 1 and the area 2 may alternatively be other shapes, or may be adjusted based on a shape of the display. This is not limited in this application. The notification interface 310 may include the main interface 300 displayed in the area 1 and a notification 311 displayed in the area 2. The area 1 may be referred to as a main display area, and the area 2 may be referred to as a notification display area. The notification 311 may include key content of the message 1. For example, if a service type corresponding to the message 1 is an air trip, the notification 311 may include a text "Boarding gate 32B". Optionally, the notification 311 may further include an application icon, and the application icon may indicate, to a user, a source of service data used to assemble the notification 311. For example, when the application icon in the notification 311 is an aviation application icon, the aviation application icon may indicate, to the user, that the source of the service data used to assemble the notification 311 is an aviation application. In addition, a ratio of a display size of the main interface 300 in the area 1 to a display size of the main interface 300 in the embodiment shown in FIG. 3A may be referred to as a scale-down ratio, where the scale-down ratio is less than 1, and the scale-down ratio may be a preset ratio. Optionally, on the notification interface 310 shown in FIG. 3B, a dynamic effect of blinking a breathing light may be displayed at an edge of the area 1. The dynamic effect of blinking a breathing light may be implemented by setting a dynamic background layer below a layer displayed on the main interface 300. Transparency and a size of the dynamic background layer may change periodically, and a change periodicity may be a preset periodicity (for example, 2 seconds). Further, optionally, a color of the dynamic background layer may be related to a service type corresponding to the message 1 and/or a priority of the message 1. Optionally, in a process in which the electronic device 100 scales down the main interface 300 shown in FIG. 3A to the display size in the embodiment shown in FIG. 3B, the electronic device 100 may first scale down the main interface 300 to a minimum display size, and then scale up the main interface 300 from the minimum display size to the display size in the embodiment shown in FIG. 3B. That is, a rebound dynamic effect may be displayed once in a scaling-down process of the main interface 300.

In some other embodiments, the electronic device 100 may receive and respond to a downward-left sliding operation performed by the user on the main interface 300, and display the notification interface 310 shown in FIG. 3B. It should be noted that, in this case, the message 1 corresponding to the notification 311 may be a message with a highest priority in one or more messages assembled by a system, or may be a message with a shortest time interval between a reminder moment and current time in one or more assembled messages. A percentage of the area 1 to the display of the electronic device 100 may be a preset percentage, or may be a percentage determined based on a start position and an end position of a sliding operation of the user. Optionally, a larger size of the area 2 indicates more content included in the notification. For example, when the size of the area 2 is greater than a size of the area 2 shown in FIG. 3B, the notification 311 may further include a text "Check-in counter: G/H" and the like.

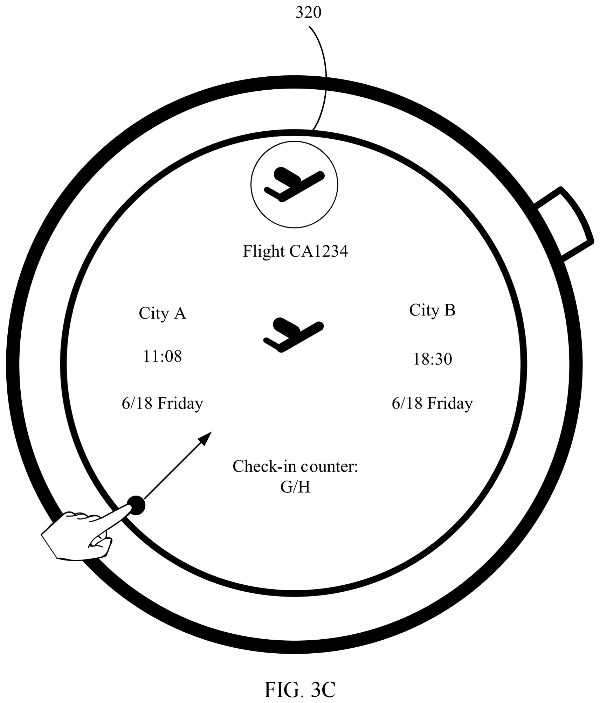

The electronic device 100 may receive and respond to a tap operation performed by the user on the notification 311, as shown in FIG. 3C, and display a details interface 320 drawn based on detailed content of the message 1.

As shown in FIG. 3C, the details interface 320 may include the detailed content of the message 1. If the service type corresponding to the message 1 is an air trip, the details interface 320 may display information such as a flight, a place of departure, a destination, departure time, arrival time, a check-in counter, and a boarding gate of the air trip. The electronic device 100 may receive and respond to an upward/downward sliding operation of the user, and display more detailed content of the air trip on the details interface 320.

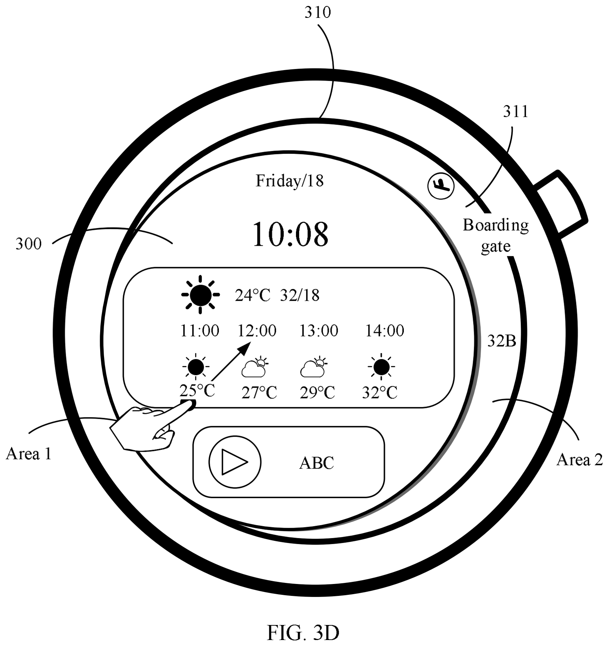

The electronic device 100 may receive and respond to an upward-right sliding operation performed by the user on the details interface 320, and display a notification interface 310 shown in FIG. 3D. The notification interface 310 shown in FIG. 3D is the same as the notification interface 310 shown in FIG. 3B.

The electronic device 100 may receive and respond to an upward-right sliding operation performed by the user on the main interface 300, close the notification 311, and display the main interface 300 shown in FIG. 3A.

It may be understood that the embodiments shown in FIG. 3A to FIG. 3D are merely examples. In this embodiment of this application, the main interface 300 may be replaced with any other interface (for example, an interface corresponding to an application), and the service type corresponding to the message 1 may alternatively be a taxi trip, a conference arrangement message, a sports and health message, or the like. In addition, an operation of starting/closing a notification display area by the user may be another operation. This is not limited in this application.

In this way, the electronic device 100 can display the key content of the message when keeping displaying of a current interface, so that the user can view the message without blocking the current interface. This does not affect a function currently used by the user.

It should be noted that, if the electronic device 100 is in a screen-off state upon arrival of a reminder moment of the message 1, the electronic device 100 may display the notification in the notification display area after the screen is turned on, where the notification includes the key content of the message 1. In this way, after the user turns on the screen, the notification corresponding to the message 1 may be pushed to remind the user.

In some embodiments, the electronic device 100 may further set maximum display duration (for example, 30 seconds or 1 minute) of a notification. When detecting that display duration of the notification reaches the maximum display duration, the electronic device 100 may stop displaying the notification, and close the notification display area. In some embodiments, if there are still one or more assembled messages in the electronic device 100, when the displayed notification currently reaches the maximum display duration, the electronic device 100 may alternatively stop displaying the notification, and display another notification in the notification display area. The newly displayed notification may include key content of one of the assembled messages.

In this way, the notification display area may alternatively be automatically closed without a manual operation of the user.

In some embodiments, the electronic device 100 may display a notification in the notification display area, and the electronic device 100 turns off the screen when display duration of the notification does not reach maximum display duration. After the electronic device 100 turns on the screen again, the electronic device 100 may display the notification in the notification display area, recalculate display duration of the notification by using a current screen-on moment as a start point, and stop displaying the notification after detecting that the display duration reaches the maximum display duration. In some other embodiments, the electronic device 100 may alternatively stop calculating the display duration of the notification when the screen is turned off, continue to calculate the display duration of the notification after the screen is turned on, and stop displaying the notification after detecting that the display duration reaches the maximum display duration.

In this way, even if the screen is turned off in a time period in which the notification is displayed, the electronic device 100 may continue to display the notification when the screen is turned on, so that the user does not miss an important message for the user.

In some embodiments, the notification display area may include a plurality of sub-areas.

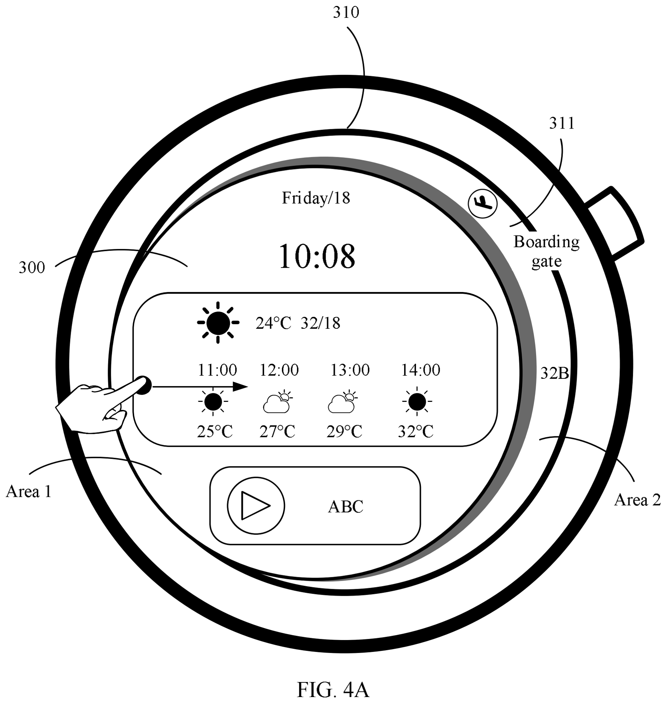

For example, as shown in FIG. 4A, the electronic device 100 displays the notification interface 310. The notification interface 310 may include the main interface 300 displayed in the area 1 and the notification 311 displayed in the area 2. The notification 311 may include the key content of the message 1. For other content of the notification 311, refer to related descriptions in the embodiment shown in FIG. 3B. The area 1 is a main display area, and the area 2 is a notification display area.

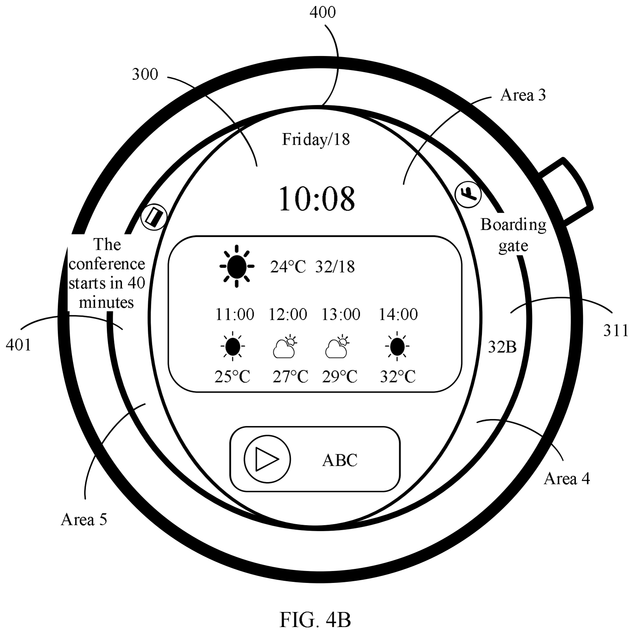

In some embodiments, when detecting arrival of a reminder moment of a message 2, the electronic device 100 may start the plurality of sub-areas of the notification display area, to display an interface 400 for a plurality of notifications shown in FIG. 4B.

As shown in FIG. 4B, the display of the electronic device 100 may include an area 3, an area 4, and an area 5, where the area 3, the area 4, and the area 5 are three areas that do not overlap each other. The area 3 may be an elliptic area shown in FIG. 3B, and the area 4 and the area 5 may be crescent areas shown in FIG. 3B. In some other embodiments, the area 3, the area 4, and the area 5 may alternatively be other shapes, or may be adjusted based on a shape of the display. This is not limited in this application. The interface 400 for a plurality of notifications may include the main interface 300 displayed in the area 3, the notification 311 displayed in the area 4, and a notification 401 displayed in the area 5. The area 3 may be a main display area, and the area 4 and the area 5 may be two sub-areas of the notification display area. The notification 401 may include key content of the message 2. For example, if a service type corresponding to the message 2 is conference arrangement, the notification 401 may include a text "The conference starts in 30 minutes", and the notification 401 may further include a calendar application icon. The calendar application icon indicates to the user that a source of service data used to assemble the notification 401 is a calendar application. Optionally, a dynamic effect such as blinking a breathing light may alternatively be displayed around the main interface 300, and colors of the breathing light on two sides of the area 3 may be different. Further, optionally, a rebound dynamic effect may alternatively be displayed in a scaling-down process of the main interface 300. For descriptions of a specific dynamic effect, refer to related descriptions in the embodiment shown in FIG. 3B.

In some other embodiments, the electronic device 100 may receive and respond to a rightward sliding operation performed by the user on the notification interface 310, and display the interface 400 for a plurality of notifications shown in FIG. 4B. It should be noted that, in this case, the message 2 corresponding to the notification 401 may be a message with a highest priority in one or more messages assembled by the system, or may be a message with a shortest time interval between a reminder moment and current time in one or more assembled messages.

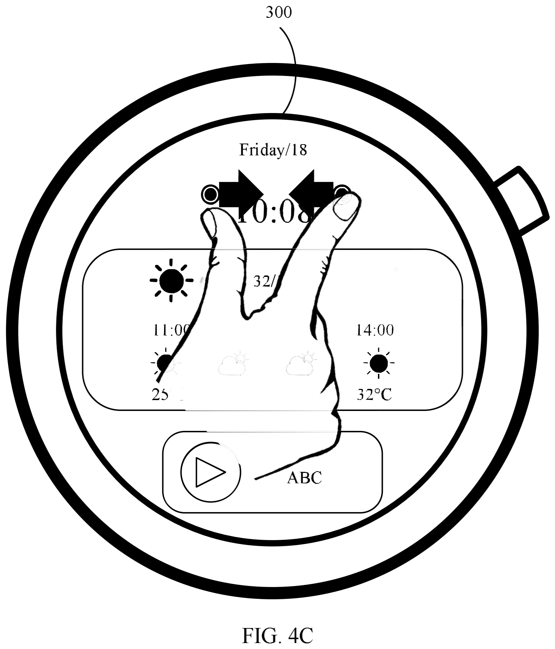

For another example, as shown in FIG. 4C, the electronic device 100 displays the main interface 300. Alternatively, the electronic device 100 may receive and respond to a two-finger pinching operation performed by the user on the main interface 300, start a plurality of sub-areas of the notification display area, and display the interface 400 for a plurality of notifications shown in FIG. 4B. It should be noted that, in this case, if there are two or more assembled messages in the electronic device 100, different notifications may be respectively displayed in the area 4 and the area 5, where each notification includes key content of one of the messages. If there is one assembled message in the electronic device 100, the electronic device 100 may display one notification in one sub-area of the notification display area, where the notification includes key content of the assembled message, and the notification may not be displayed in another sub-area of the notification display area.

In some embodiments, when displaying the interface 400 for a plurality of notifications shown in FIG. 4B, the electronic device 100 may receive and respond to a two-finger reverse sliding operation performed by the user on the main interface 300, and display the main interface 300 shown in FIG. 4C. In some other embodiments, the electronic device 100 may alternatively receive and respond to a leftward sliding operation performed by the user on the main interface 300 in the embodiment shown in FIG. 4B, and display the notification interface 310 shown in FIG. 4A.

It may be understood that the embodiments shown in FIG. 4A to FIG. 4C merely describe an example in which the notification display area may include a plurality of sub-areas, and the plurality of sub-areas may be simultaneously started/closed, or may be separately started/closed. In this embodiment of this application, the main interface 300 may also be replaced with any other interface, and the notification 311 and the notification 401 may also be replaced with notifications of other messages. This is not limited in this application. In addition, in some embodiments, the notification display area of the electronic device 100 may include more sub-areas. This is not limited in this application either.

In this way, the electronic device 100 can display notifications of a plurality of messages without affecting browsing of a current interface by the user.

In some embodiments, the electronic device 100 may alternatively display one or more moving notifications in the notification display area in a rotation display manner, and each notification includes key content of one message.

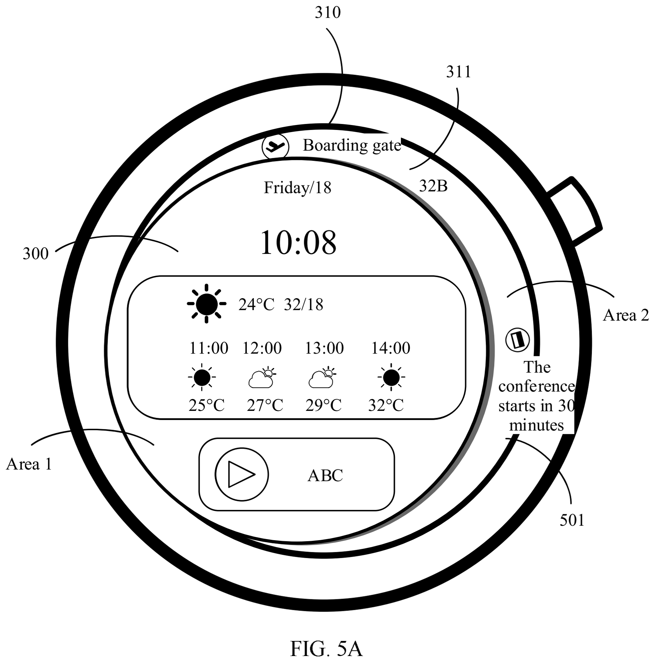

For example, when the electronic device 100 displays the notification interface 310 shown in FIG. 3B, if the electronic device 100 detects arrival of a reminder moment 2 of the message 2, as shown in FIG. 5A, the electronic device 100 may display, in the area 2, the notification 311 and a notification 501 that are in motion. For example, the electronic device 100 may move the notification 311 from a center of the area 2 to an upper edge of the area 2, and move the notification 501 from a lower edge of the area 2 to the center of the area 2. For specific content of the notification 501, refer to related descriptions of the notification 401 shown in FIG. 4B. Optionally, a trailing effect of the notification 311 and the notification 501 may be further displayed during movement of the notification 311 and the notification 501.

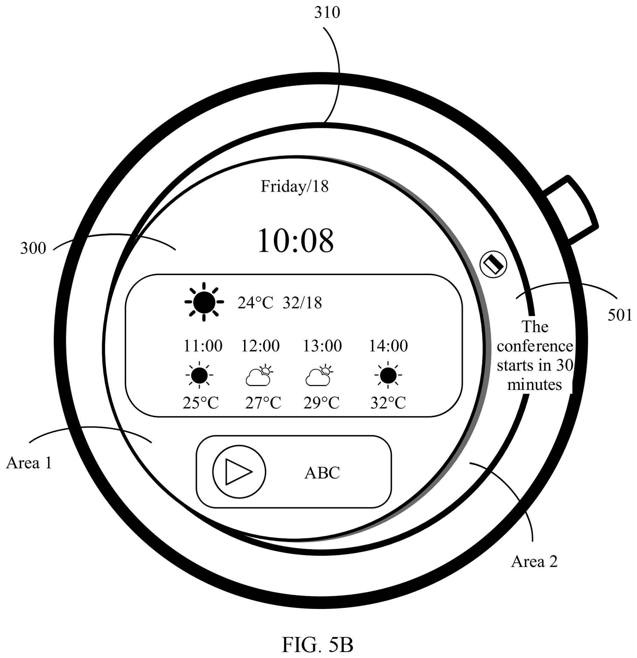

When the notification 501 moves from an edge of the area 2 to the center of the area 2, as shown in FIG. 5B, the notification 501 is displayed at the center of the area 2. In this case, the notification 311 is not displayed in the area 2. Afterward, the notification 501 may move toward the upper edge of the area 2.

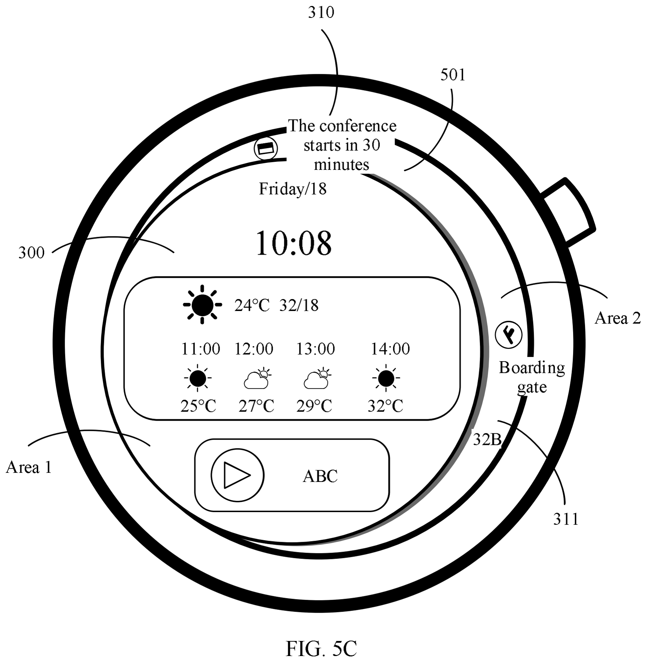

When the notification 401 moves to the upper edge of the area 2, as shown in FIG. 5C, the notification 311 may be displayed at the lower edge of the area 2, and the notification 311 moves from the lower edge of the area 2 to the center of the area 2.

It may be understood that the embodiments shown in FIG. 5A to FIG. 5C are merely examples. In this embodiment of this application, the message 1 and the message 2 may alternatively be other messages, and the electronic device 100 may alternatively display more notifications in the area 2 in a rotation manner. In addition, a rotation direction of the two or more notifications may be another direction (for example, moving from a left edge of the area 2 to a right edge of the area 2). This is not limited in this application.

In this way, the electronic device 100 can also display notifications of a plurality of messages without affecting browsing of content on an interface 1 by the user.

In some embodiments, the electronic device 100 may alternatively receive and respond to an operation of switching a notification by the user, and switch a notification displayed in the notification display area. For example, on the notification interface 310 shown in FIG. 3B, the electronic device 100 may receive and respond to an upward sliding operation performed by the user on the notification 311, and display the notification 501 in the area 2, as shown in FIG. 5B. For another example, the electronic device 100 may alternatively receive and respond to a downward sliding operation performed by the user on the notification 501 shown in FIG. 5B, and display the notification 311 in the area 2, as shown in FIG. 3B.

In some other embodiments, when the electronic device 100 displays one notification in the notification display area, the electronic device 100 may further display an ellipsis symbol in the notification display area, where the ellipsis symbol indicates to the user that there is an undisplayed notification in the electronic device 100.

In some other embodiments, the electronic device 100 may alternatively display a plurality of notifications in the plurality of notification display areas (or the plurality of sub-areas of the notification display area) in a rotation manner. In the plurality of notification display areas, notifications of a same service type or notifications of a same priority may be displayed in a same notification display area.

In some embodiments, the electronic device 100 may further obtain a user tag.

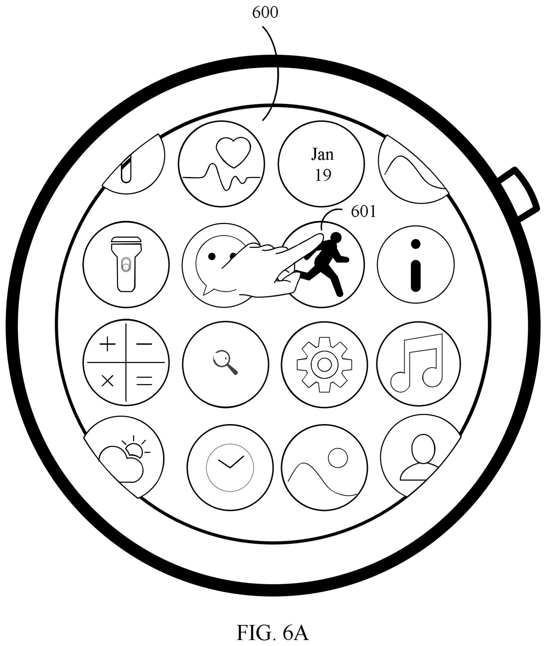

For example, as shown in FIG. 6A, the electronic device 100 may display a main interface 600, and the main interface 600 may include one or more application icons, for example, a sports and health application icon 601.

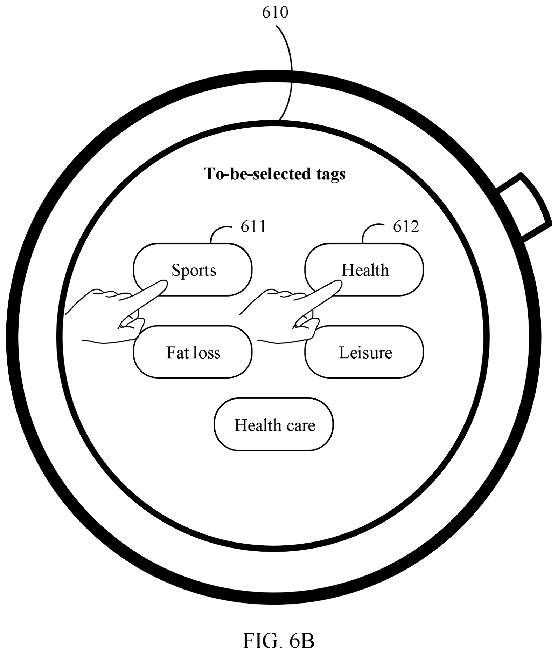

The electronic device 100 may receive and respond to a tap operation performed by the user on the sports and health application icon 601, and when detecting that a tag push condition is met, display, in a sports and health application, a tag selection interface 610 shown in FIG. 6B. The tag push condition may be: The user uses the sports and health application on the electronic device 100 for the first time, the electronic device 100 completes pairing with another electronic device like a mobile phone for the first time, or it is detected that a time interval from the last tag push reaches a preset time interval, or the like.

As shown in FIG. 6B, the tag selection interface 610 may include one or more user tags, for example, a sports tag 611, a health tag 612, a fat loss tag, a leisure tag, and a health care tag. The user tags can reflect user preferences.

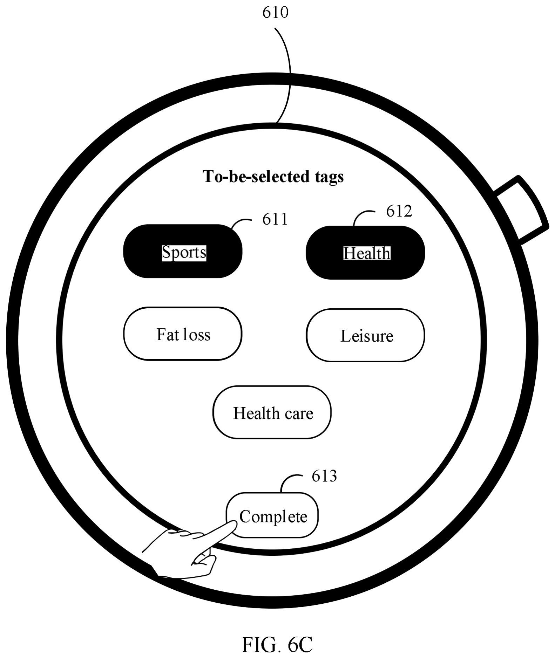

The electronic device 100 may receive and respond to a tap operation performed by the user on the sports tag 611 and the health tag 612, and display selected indicators on the sports tag 611 and the health tag 612, as shown in FIG. 6C. The selected indicator may be a selected tag displayed in a color different from that of an unselected tag, or may be another identifier number. In addition, after detecting that a tag selected by the user exists, the electronic device 100 may further display a complete control 613 on the tag selection interface 610, where the complete control 613 is configured to trigger the electronic device 100 to determine a user tag based on a currently selected user tag.

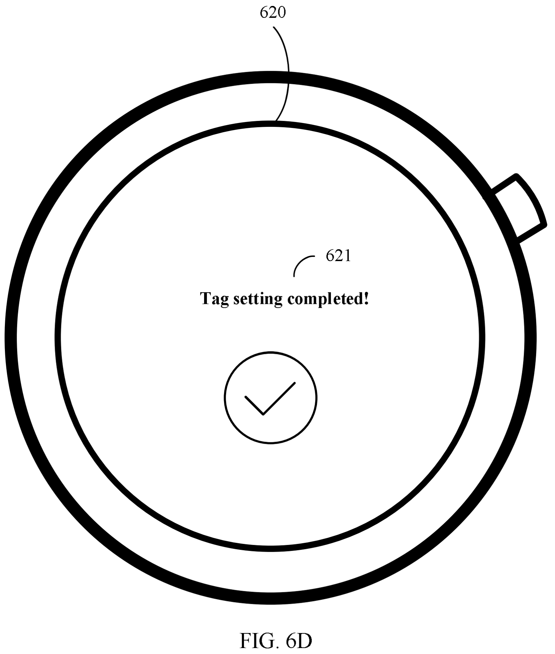

The electronic device 100 may receive and respond to a tap operation performed by the user on the complete control 613, and display a setting complete interface 620 shown in FIG. 6D. As shown in FIG. 6D, the setting complete interface 620 may display a setting complete prompt 621, where the setting complete prompt 621 indicates to the user that tag setting is completed. For example, the setting complete prompt 621 may include a text "Tag setting completed!"

It may be understood that the embodiments shown in FIG. 6A to FIG. 6D are merely examples. In this embodiment of this application, an application supporting obtaining of the user tag may be another application (for example, a sleep application or a blood pressure application), and a tag displayed on the tag selection interface may also include more or fewer tags than those in the foregoing embodiments, or tags different from those in the foregoing embodiments. This is not limited in this application.

In this way, the electronic device 100 may obtain the user tag based on an operation of the user.

The following describes a procedure of a message push method according to an embodiment of this application.

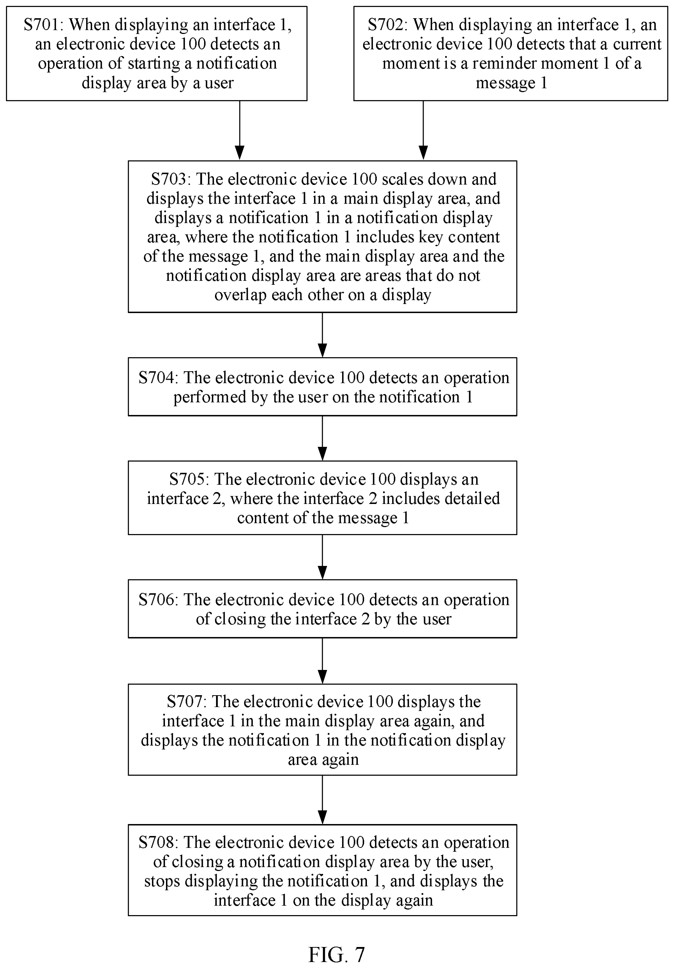

As shown in FIG. 7, a specific procedure of the message push method may include the following steps.

S701: When displaying an interface 1, an electronic device 100 detects an operation of starting a notification display area by a user.

The interface 1 on the display may be any interface. For example, the interface 1 may be the main interface 300 shown in FIG. 3A. A display range of the interface 1 may be all areas of the display.

The operation of starting a notification display area by the user may be a sliding operation performed by the user on the interface 1, for example, the downward-left sliding operation performed by the user on the main interface 300 in the embodiment shown in FIG. 3A. In some other embodiments, the operation of starting a notification display area by the user may alternatively be a two-finger pinching operation on the interface 1, for example, the two-finger pinching operation on the main interface 300 in the embodiment shown in FIG. 4C. It may be understood that the foregoing embodiments are merely two examples. In this embodiment of this application, the operation of starting a notification display area by the user may be another operation or a user-defined operation. This is not limited in this application.

After step S701, the electronic device 100 may perform the following step S703.

S702: When displaying an interface 1, an electronic device 100 detects that a current moment is a reminder moment 1 of a message 1.

For specific content of the interface 1, refer to related descriptions of step S701.

For a manner of determining the reminder moment 1 of the message 1, refer to related descriptions in the embodiment shown in FIG. 2A and FIG. 2B. Details are not described herein again.

When detecting that the current moment is the reminder moment 1 of the message 1, the electronic device 100 may perform the following step S703.

S703: The electronic device 100 scales down and displays the interface 1 in a main display area, and displays a notification 1 in the notification display area, where the notification 1 includes key content of the message 1, and the main display area and the notification display area are areas that do not overlap each other on the display.

A display size of the interface 1 in the main display area is less than a display size of the interface 1 on the display.

In some embodiments, in a process in which the interface 1 is scaled down and displayed in the main display area, the interface 1 may display a rebound dynamic effect. To be specific, the interface 1 may be first scaled down to a minimum size, and then scaled up to the display size of the interface 1 in the main display area. Optionally, a dynamic effect of blinking a breathing light may be further displayed around the main display area.

In some embodiments, the notification display area may be an area of the display. For example, in the embodiment shown in FIG. 3B, the main display area may be the area 1, the notification display area may be the area 2, the interface 1 may be the main interface 300, and the notification 1 may be the notification 311.

In some other embodiments, the notification display area may alternatively include a plurality of sub-areas, and the plurality of sub-areas are areas that do not overlap each other on the display. For another example, in the embodiment shown in FIG. 4B, the main display area may be the area 3, the notification display area may include the area 4 and the area 5, the interface 1 may be the main interface 300, and the notification 1 may be the notification 401 or the notification 311.

In some embodiments, the plurality of sub-areas of the notification display area may alternatively be sequentially started. In addition, when a different quantity of sub-areas are started, areas and/or shapes of the sub-area on the display may also be different. For example, for a process in which the electronic device 100 sequentially starts the plurality of sub-areas of the notification display area, refer to related descriptions in the embodiments shown in FIG. 4A to FIG. 4B.

For a manner of obtaining the key content of the message 1, refer to related descriptions in the embodiment shown in FIG. 2A and FIG. 2B.

In this way, the electronic device 100 can display the key content of the message 1 without blocking the interface 1.

S704: The electronic device 100 detects an operation performed by the user on the notification 1.

For example, the operation performed by the user on the notification 1 may be the tap operation performed by the user on the notification 311 in the embodiment shown in FIG. 3B.

S705: The electronic device 100 displays an interface 2, where the interface 2 includes detailed content of the message 1.

For example, when the notification 1 is the notification 311 shown in FIG. 3B, the interface 2 may be the details interface 320 shown in FIG. 3C, where the details interface 320 displays detailed content of the message corresponding to the notification 311.

For a manner of obtaining the detailed content of the message 1, refer to related descriptions in the embodiment shown in FIG. 2A and FIG. 2B.

S706: The electronic device 100 detects an operation of closing the interface 2 by the user.

The operation of closing the interface 2 by the user may be an operation of sliding toward the notification display area performed by the user on the interface 2, another operation, or a user-defined operation. This is not limited in this application.

For example, the operation of closing the interface 2 by the user may be the upward-right sliding operation on the details interface 320 in the embodiment shown in FIG. 3C.

S707: The electronic device 100 displays the interface 1 in the main display area again, and displays the notification 1 in the notification display area again.

In this way, the electronic device 100 can display the detailed content of the message 1 based on an operation of the user, so that the user can view the detailed content of the message 1 at any time.

S708: The electronic device 100 detects an operation of closing a notification display area by the user, stops displaying the notification 1, and displays the interface 1 on the display again.

For example, the operation of closing a notification display area by the user may be the upward-right sliding operation performed by the user on the main interface 300 in the embodiment shown in FIG. 3D.

In some embodiments, if the electronic device 100 displays the plurality of sub-areas of the notification display area, in response to an operation of closing all sub-areas by the user, the electronic device 100 may stop displaying all notifications and close all sub-areas. Alternatively, in response to an operation of closing one of the sub-areas by the user, the electronic device 100 may stop displaying a notification in the sub-area, and close the sub-area. For example, refer to related descriptions after the embodiment shown in FIG. 4C.

According to the message push method provided in this application, the electronic device 100 can push a message without blocking the interface 1. In addition, after stopping displaying the detailed content of the message 1, the electronic device 100 may display the interface 1 and the notification 1 again, so that the user can view the detailed content of the message 1 at any time.

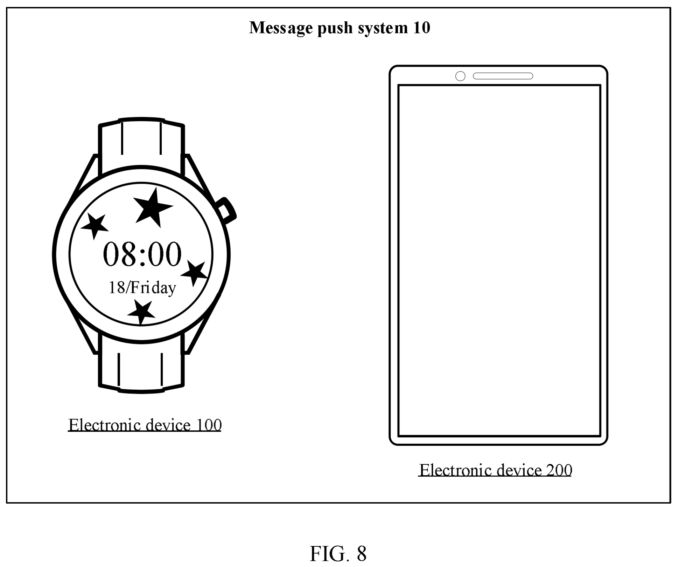

FIG. 8 is a diagram of a system architecture of a message push system 10 according to an embodiment of this application.

As shown in FIG. 8, the message push system 10 may include an electronic device 100 and an electronic device 200. The electronic device 100 may be the watch shown in FIG. 8, and the electronic device 200 may be the mobile phone shown in FIG. 8. A communication connection may be established between the electronic device 100 and the electronic device 200.

In some embodiments, the electronic device 100 may obtain service data sent by a plurality of applications installed in the electronic device 200, or may obtain service data sent by a plurality of applications in the electronic device 100, and determine an output message, a message output moment, a priority, and the like based on the service data. For a specific procedure, refer to related descriptions in the embodiments shown in FIG. 2A to FIG. 7.

In some embodiments, the electronic device 200 may obtain service data sent by an application in the electronic device 200, and send the service data to the electronic device 100 through the communication connection. The electronic device 100 may determine an output message, a message output moment, a priority, and the like based on the obtained service data.

In some other embodiments, the electronic device 200 may alternatively obtain service data sent by an application in the electronic device 100 and an application in the electronic device 200, determine an output message, a message output moment, a priority, and the like based on the service data, and send the message, a reminder moment, the priority, and the like to the electronic device 100 before arrival of the reminder moment.

It may be understood that the message push system shown in FIG. 8 is merely an example. In this embodiment of this application, the electronic device 100 may be another wearable device like a band, and the electronic device 200 may be another electronic device like a tablet computer. Device forms and device types of the electronic device 100 and the electronic device 200 are not limited in this application. In addition, in some embodiments, the message push system 10 may further include more or fewer electronic devices than those in the embodiment shown in FIG. 8, or electronic devices different from those in the embodiment shown in FIG. 8. This is not limited in this application either.

It should be noted that, for a hardware structure of the electronic device 200, refer to the hardware structure of the electronic device 100 shown in FIG. 1B, and for a software architecture of the electronic device 200, refer to the software structure of the electronic device 100 shown in FIG. 1C. Details are not described herein again in this application.

The following describes functional modules of a message push system 10 according to an embodiment of this application.

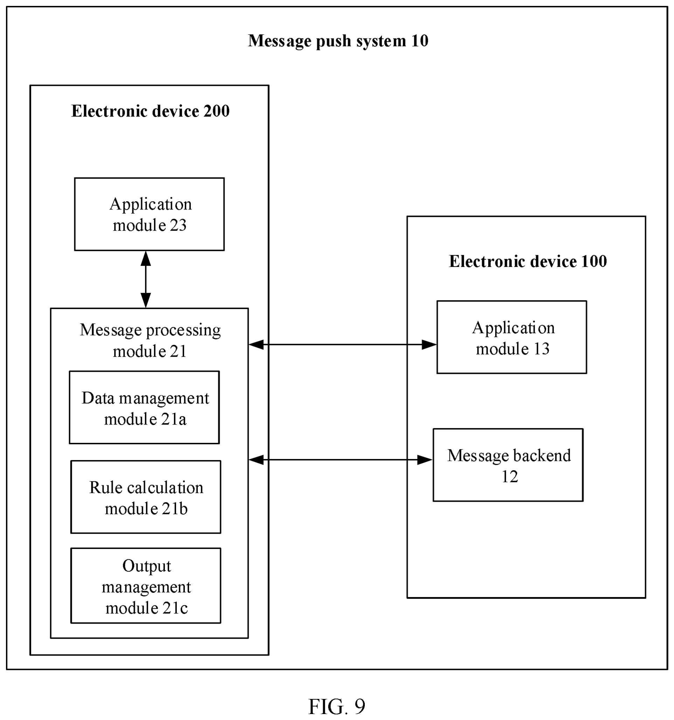

As shown in FIG. 9, the message push system 10 may include an electronic device 100 and an electronic device 200. The electronic device 100 may include a message backend 12 and an application module 13. The electronic device 200 may include a message processing module 21 and an application module 23. The message processing module 21 may include a data management module 21a, a rule calculation module 21b, and an output management module 21c.

The application module 13 may include one application or a plurality of applications installed in the electronic device 100, for example, a series of applications in the application layer in the embodiment shown in FIG. 1C. The application module 13 may send a plurality of pieces of service data to the message processing module 21. For specific content of data of each service (also referred to as service data), refer to related descriptions in the embodiment shown in FIG. 2A and FIG. 2B.

The application module 23 may include one application or a plurality of applications installed in the electronic device 200. The application module 23 may send a plurality of pieces of service data to the message processing module 21.

The message processing module 21 is disposed in the electronic device 200, and may obtain service data sent by the plurality of applications installed in the electronic device 200. The message processing module 21 may also obtain, through a communication connection between the electronic device 100 and the electronic device 200, service data sent by the plurality of applications installed in the electronic device 100. After obtaining the service data, the message processing module 21 may determine, based on the obtained service data, a message that needs to be output, a reminder moment of the message, a priority, and the like.

For other functions of the modules in the message processing module 21 and specific functions of the message backend 12, refer to related descriptions in the embodiment shown in FIG. 2A and FIG. 2B. Details are not described herein again.

In some other embodiments, the modules in the message processing module 21 may be separately disposed in the electronic device 100 and the electronic device 200. For example, the data management module 21a and the rule calculation module 21b are disposed in the electronic device 200, and the output management module is disposed in the electronic device 100. This is not limited in this application.

It may be understood that the embodiment shown in FIG. 9 is merely an example. In this embodiment of this application, the message push system 10 may include more or fewer functional modules than those in FIG. 9, or functional modules different from those in the embodiment shown in FIG. 9. This is not limited in this application.

The following describes a specific procedure of a message push method according to an embodiment of this application.

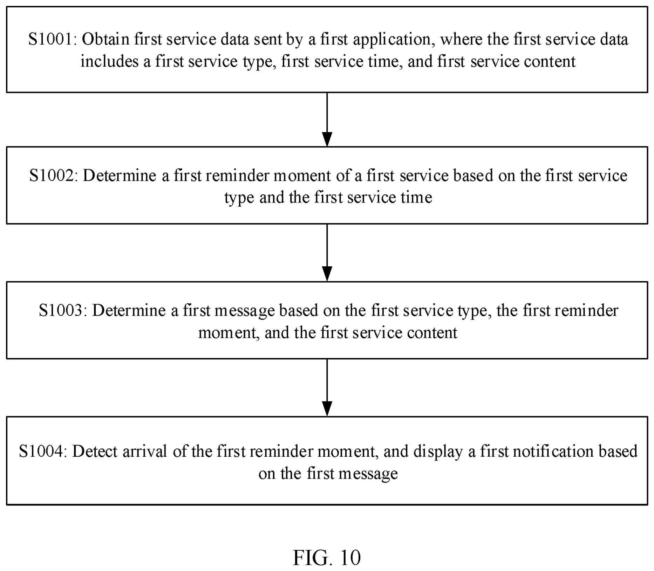

As shown in FIG. 10, a specific procedure in which a first electronic device performs the message push method provided in this embodiment of this application may include the following steps.

S1001: The first electronic device obtains first service data sent by a first application, where the first service data includes a first service type, first service time, and first service content.

The first electronic device may be the electronic device 100 in the foregoing embodiments. The first application may be the application 1 in the embodiment shown in FIG. 2A and FIG. 2B. The first application may be an application in the first electronic device, or may be an application in a second electronic device. The second electronic device may be the electronic device 200 in the foregoing embodiments.

The first service data may be data of the service 1 in the embodiment shown in FIG. 2A and FIG. 2B, the first service type may be a type of the service 1, the first service time may be service time of the service 1, and the first service content may be content of the service 1.

In a possible implementation, the first electronic device may further obtain a user status before determining the first reminder moment, where the user status indicates a current physical status of a user or a status of an environment in which the user is currently located.

In a possible implementation, the method further includes: before determining the first reminder moment, obtain a user tag, where the user tag indicates a preference of the user.

S1002: The first electronic device determines a first reminder moment of a first service based on the first service type and the first service time.

The first reminder moment may be the reminder moment 1 in the embodiment shown in FIG. 2A and FIG. 2B. For a manner of determining the first reminder moment, refer to related descriptions in the embodiment shown in FIG. 2A and FIG. 2B.

In a possible implementation, the first electronic device may alternatively determine the first reminder moment based on the first service type, the first service time, and the user status. In a possible implementation, the first electronic device may alternatively determine the first reminder moment based on the first service type, the first service time, and the user tag. In a possible implementation, the first electronic device may alternatively determine the first reminder moment based on the first service type, the first service time, the user status, and the user tag.

S 1003: The first electronic device determines a first message based on the first service type, the first reminder moment, and the first service content.

The first message may be the message 1 in the embodiment shown in FIG. 2A and FIG. 2B, and the first message may include key content and detailed content. For a manner of determining the first message, refer to related descriptions in the embodiment shown in FIG. 2A and FIG. 2B.

In a possible implementation, the first electronic device may alternatively determine the first message based on the first service type, the first reminder moment, the first service content, and the user status. In a possible implementation, the first electronic device may alternatively determine the first message based on the first service type, the first reminder moment, the first service content, and the user tag. In a possible implementation, the first electronic device may alternatively determine the first message based on the first service type, the first reminder moment, the first service content, the user status, and the user tag.

S1004: The first electronic device detects arrival of the first reminder moment, and displays a first notification based on the first message.

The first notification may be the notification 1 in the foregoing embodiment.

According to the message push method provided in this application, a message can be pushed based on a reminder moment, to avoid simultaneous push of a plurality of messages and therefore the user does not miss a message.

In a possible implementation, the method further includes: displaying a first interface in an entire area of a display of the first electronic device before arrival of the first reminder moment; and displaying the first notification based on the first message specifically includes: displaying the first interface in a first area of the display, and displaying the first notification in a second area of the display based on the first message, where the first area and the second area do not overlap each other.

The first interface may be the interface 1 in the embodiment shown in FIG. 7, the first area may be the area 1 in the foregoing embodiment, and the second area may be the area 2. In some embodiments, the first area may alternatively be the main display area in the embodiment shown in FIG. 7, and the second area may be the notification display area in the embodiment shown in FIG. 7.

In this way, the first notification can be displayed when the first interface is kept being displayed, to avoid affecting viewing of content of a current interface by the user.

In a possible implementation, the method further includes: receiving a first operation of the user, where the first operation is performed on a display area of the first notification; and in response to the first operation, displaying first content of the first message in the entire area of the display, where an information amount of the first content is greater than an information amount of the first notification. The first content includes a part or all of content of the first message.

The first operation of the user may be an operation performed by the user on the notification 1 in step S704 shown in FIG. 7. A second interface may be the interface 2 in step S705 shown in FIG. 7.

In this way, more content of the first message can be displayed based on a user operation.

In a possible implementation, the method further includes: after displaying a second interface, receiving a second operation performed by the user on the second interface; and in response to the second operation, displaying the first interface in the first area of the display, and displaying the first notification in the second area of the display.

The second operation performed by the user on the second interface may be the operation of closing the interface 2 by the user in step S706 shown in FIG. 7.

In a possible implementation, the method further includes: receiving a third operation performed by the user on the first interface; and displaying the first interface in the entire area of the display in response to the third operation; or detecting that display duration of the first notification reaches first duration, and displaying the first interface in the entire area of the display.

The third operation performed by the user on the current interface may be the operation of closing a notification display area by the user in step S708 shown in FIG. 7. The first duration may be maximum display duration of the notification in the foregoing embodiment.

In this way, a notification display area can be closed in a manual operation manner of the user or in an automatic manner.

In a possible implementation, the method further includes: displaying the first interface in the entire area of the display of the first electronic device after the first reminder moment; receiving a fourth operation performed by the user on the first interface; and in response to the fourth operation, displaying the first interface in the first area of the display, and displaying the first notification in the second area of the display.

The fourth operation performed by the user on the first interface may be the operation of starting a notification display area by the user in step S701 shown in FIG. 7.

In this way, the notification display area can be started based on the user operation, and the first notification can be displayed.

In a possible implementation, the method further includes: obtaining second service data sent by a second application, where the second service data includes a second service type, second service time, and second service content; determining a second reminder moment of a second service based on the second service type and the second service time; determining a second message based on the second service type, the second reminder moment, and the second service content; and detecting arrival of the second reminder moment, and displaying a second notification based on the second message.

In a possible implementation, the method further includes: before arrival of the second reminder moment, displaying the first interface in the first area of the display, and displaying the first notification in the second area of the display, where the first area and the second area do not overlap each other; and displaying the second notification specifically includes: displaying the first interface in a third area, displaying the first notification in a fourth area, and displaying the second notification in a fifth area, where the third area, the fourth area, and the fifth area are areas of the display that do not overlap each other.

The third area may be the area 3 in the embodiment shown in FIG. 4B, the fourth area may be the area 4, and the fifth area may be the area 5.

In this way, a plurality of notifications can be displayed in a plurality of sub-areas of the notification display area.

In a possible implementation, the method further includes: receiving and responding to a fifth operation performed by the user on a current interface, or detecting that display duration of the second notification reaches the first duration; displaying the first interface in the first area of the display; and displaying the first notification in the second area of the display.

The fifth operation performed by the user on the current interface may be the leftward sliding operation performed by the user on the main interface 300 in the embodiment shown in FIG. 4B.

In this way, one sub-area of the notification display area can be closed.

In a possible implementation, the method further includes: receiving a sixth operation performed by the user on a current interface; and displaying the first interface in the entire area of the display in response to the sixth operation.

The sixth operation performed by the user on the current interface may be the two-finger reverse sliding operation performed by the user on the main interface 300 in the embodiment shown in FIG. 4B.

In this way, all sub-areas of the notification display area can be closed.

In a possible implementation, the method further includes: before arrival of the second reminder moment, displaying the first interface in the first area of the display, and displaying the first notification in the second area of the display, where the first area and the second area do not overlap each other; and displaying the second notification specifically includes: detecting that the display duration of the first notification reaches second duration, or receiving and responding to an operation of switching a notification by the user; stopping displaying the first notification; and displaying the second notification in the second area.

The second duration may be less than or equal to the first duration.

In this way, a notification displayed in the notification display area can be switched in a manual switching manner or an automatic switching manner.

In a possible implementation, the method further includes: before arrival of the second reminder moment, displaying the first interface in the first area of the display, and displaying the first notification in the second area of the display, where the first area and the second area do not overlap each other; and displaying the second notification specifically includes: displaying, in the second area, the first notification and the second notification that are in motion.

For displaying, in the second area, the first notification and the second notification that are in motion, refer to related descriptions in the embodiments shown in FIG. 5A to FIG. 5C.

In this way, one or more moving notifications can be displayed in the notification display area in a rotation display manner.

In a possible implementation, the first reminder moment is earlier than the second reminder moment, and before arrival of the first reminder moment, the method further includes: displaying the first interface in the entire area of the display; receiving a seventh operation performed by the user on the first interface; and in response to the seventh operation, displaying the first interface in the first area of the display, and displaying the first notification in the second area of the display.

The seventh operation performed by the user on the first interface may be the operation of starting a notification display area by the user in step S701 shown in FIG. 7.

In this way, a notification with a short time interval between a reminder moment and current time can be preferentially displayed.

In a possible implementation, the method further includes: determining a first priority of the first service based on the first service type; determining a second priority of the second service based on the second service type, where the first priority is higher than the second priority; displaying the first interface in the entire area of the display; receiving a seventh operation performed by the user on the first interface; and in response to the seventh operation, displaying the first interface in the first area of the display, and displaying the first notification in the second area of the display.

In this way, a notification with a higher priority can be preferentially displayed.

In a possible implementation, determining the first priority of the first service based on the first service type specifically includes: determining the first priority of the first service based on the first service type and the user status; determining the priority of the first service based on the first service type and the user tag; or determining the first priority of the first service based on the first service type, the user tag, and the user status.

In a possible implementation, the first application is installed in the first electronic device or a second electronic device, and a communication connection is established between the second electronic device and the first electronic device.

The implementations of this application may be randomly combined to achieve different technical effects.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like.

A person of ordinary skill in the art may understand that all or a part of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A message push method, applied to a first electronic device, wherein the method comprises:
obtaining first service data sent by a first application, wherein the first service data comprises a first service type, first service time, and first service content;
determining a first reminder moment of the first service based on the first service type and the first service time;
determining a first message based on the first service type, the first reminder moment, and the first service content; and
detecting arrival of the first reminder moment, and displaying a first notification based on the first message.

2. The method according to claim 1, wherein the method further comprises:
obtaining a user status before determining the first reminder moment, wherein the user status indicates a current physical status of a user or a status of an environment in which the user is currently located; and
determining the first reminder moment of the first service based on the first service type and the first service time specifically comprises:
determining the first reminder moment based on the first service type, the first service time, and the user status.

3. The method according to claim 2, wherein determining the first message based on the first service type, the first reminder moment, and the first service content specifically comprises:
determining the first message based on the first service type, the first reminder moment, the user status, and the first service content.

4. The method according to any one of claims 1 to 3, wherein the method further comprises:
obtaining a user tag before determining the first reminder moment, wherein the user tag indicates a preference of the user; and
determining the first reminder moment of the first service based on the first service type and the first service time specifically comprises:
determining the first reminder moment based on the first service type, the first service time, and the user tag.

5. The method according to claim 4, wherein determining the first message based on the first service type, the first reminder moment, and the first service content specifically comprises:
determining the first message based on the first service type, the first reminder moment, the user tag, and the first service content.

6. The method according to any one of claims 1 to 5, wherein the method further comprises:
displaying a first interface in an entire area of a display of the first electronic device before arrival of the first reminder moment; and
displaying the first notification based on the first message specifically comprises:
displaying the first interface in a first area of the display, and displaying the first notification in a second area of the display based on the first message, wherein the first area and the second area do not overlap each other.

7. The method according to claim 6, wherein the method further comprises:
receiving a first operation of the user, wherein the first operation is performed on a display area of the first notification; and
in response to the first operation, displaying first content of the first message in the entire area of the display, wherein an information amount of the first content is greater than an information amount of the first notification.

8. The method according to claim 7, wherein the first content of the first message is a part or all of content of the first message.

9. The method according to any one of claims 6 to 8, wherein the method further comprises:
after displaying the second interface, receiving a second operation performed by the user on the second interface; and
in response to the second operation, displaying the first interface in the first area of the display, and displaying the first notification in the second area of the display.

10. The method according to claim 6 or 9, wherein the method further comprises:
receiving a third operation performed by the user on the first interface; and
displaying the first interface in the entire area of the display in response to the third operation; or
detecting that display duration of the first notification reaches first duration, and displaying the first interface in the entire area of the display.

11. The method according to any one of claims 1 to 10, wherein the method further comprises:
displaying the first interface in the entire area of the display of the first electronic device after the first reminder moment;
receiving a fourth operation performed by the user on the first interface; and
in response to the fourth operation, displaying the first interface in the first area of the display, and displaying the first notification in the second area of the display.

12. The method according to any one of claims 1 to 11, wherein the method further comprises:
obtaining second service data sent by a second application, wherein the second service data comprises a second service type, second service time, and second service content;
determining a second reminder moment of the second service based on the second service type and the second service time;
determining the second message based on the second service type, the second reminder moment, and the second service content; and
detecting arrival of the second reminder moment, and displaying a second notification based on the second message.

13. The method according to claim 12, wherein the method further comprises:
before arrival of the second reminder moment, displaying the first interface in the first area of the display, and displaying the first notification in the second area of the display, wherein the first area and the second area do not overlap each other; and
displaying the second notification specifically comprises:
displaying the first interface in a third area, displaying the first notification in a fourth area, and displaying the second notification in a fifth area, wherein the third area, the fourth area, and the fifth area are areas of the display that do not overlap each other.

14. The method according to claim 13, wherein the method further comprises:
receiving and responding to a fifth operation performed by the user on a current interface, or detecting that display duration of the second notification reaches the first duration; displaying the first interface in the first area of the display; and displaying the first notification in the second area of the display.

15. The method according to claim 13, wherein the method further comprises:
receiving a sixth operation performed by the user on a current interface; and
displaying the first interface in the entire area of the display in response to the sixth operation.

16. The method according to claim 12, wherein the method further comprises:
before arrival of the second reminder moment, displaying the first interface in the first area of the display, and displaying the first notification in the second area of the display, wherein the first area and the second area do not overlap each other; and
displaying the second notification specifically comprises:
detecting that the display duration of the first notification reaches second duration, or receiving and responding to an operation of switching a notification by the user; stopping displaying the first notification; and displaying the second notification in the second area.

17. The method according to claim 12, wherein the method further comprises:
before arrival of the second reminder moment, displaying the first interface in the first area of the display, and displaying the first notification in the second area of the display, wherein the first area and the second area do not overlap each other; and
displaying the second notification specifically comprises:
displaying, in the second area, the first notification and the second notification that are in motion.

18. The method according to claim 12, wherein the first reminder moment is earlier than the second reminder moment, and before arrival of the first reminder moment, the method further comprises:
displaying the first interface in the entire area of the display;
receiving a seventh operation performed by the user on the first interface; and
in response to the seventh operation, displaying the first interface in the first area of the display, and displaying the first notification in the second area of the display.

19. The method according to claim 12, wherein the method further comprises:
determining a first priority of the first service based on the first service type;
determining a second priority of the second service based on the second service type, wherein the first priority is higher than the second priority;
displaying the first interface in the entire area of the display;
receiving a seventh operation performed by the user on the first interface; and
in response to the seventh operation, displaying the first interface in the first area of the display, and displaying the first notification in the second area of the display.

20. The method according to any one of claims 1 to 19, wherein the first application is installed in the first electronic device or a second electronic device, and a communication connection is established between the second electronic device and the first electronic device.

21. A message push system, wherein the message push system comprises a first electronic device and a second electronic device;
the second electronic device is configured to obtain first service data sent by a first application, wherein the first service data comprises a first service type, first service time, and first service content;
the second electronic device is configured to determine a first reminder moment of the first service based on the first service type and the first service time;
the second electronic device is configured to determine a first message based on the first service type, the first reminder moment, and the first service content;
the second electronic device is configured to send the first message and the first reminder moment to the first electronic device; and
the first electronic device is configured to: when detecting arrival of the first reminder moment, display a first notification based on the first message.

22. The system according to claim 21, wherein before arrival of the first reminder moment, the first electronic device is further configured to display a first interface in an entire area of a display of the first electronic device; and
displaying the first notification based on the first message specifically comprises:
displaying the first interface in a first area of the display, and displaying the first notification in a second area of the display based on the first message, wherein the first area and the second area do not overlap each other.

23. An electronic device, wherein the electronic device is a first electronic device and comprises one or more processors, one or more memories, a micro air pump, an air bag, the one or more memories are coupled to the one or more processors, the one or more memories are configured to store computer program code, the computer program code comprises computer instructions, and when the one or more processors execute the computer instructions, the first electronic device is caused to perform the method according to any one of claims 1 to 20.

24. A computer-readable storage medium, comprising computer instructions, wherein when the computer instructions are run on a first electronic device, the electronic device is caused to perform the method according to any one of claims 1 to 20.
